# EUROPEAN PATENT APPLICATION

(11) **EP 4 686 129 A1**
(43) Date of publication of application: **28.01.2026**
(21) Application number: 24191089.2
(22) Date of filing: 26.07.2024
(51) Int. Cl.: H04L 5/00, H04L 27/26

(54) **RESOURCE ALLOCATION**

(71) Applicant: Nokia Technologies Oy, 02610 Espoo (FI)
(72) Inventor: Marcone, Alessio, München (DE); Hugl, Klaus, Wien (AT); Hooli, Kari Juhani, Oulu (FI); Maso, Marco, Issy les Moulineaux (FR)
(74) Representative: Cohausz & Florack

(57) **Abstract**

Methods, apparatus and systems for resource allocation are disclosed.

## Description

### TECHNOLOGICAL FIELD

The present disclosure is related to but not limited to communication networks as defined by the 3GPP standard, such as the 5G and/or the 6G standard. The disclosure particularly relates to resource allocation.

### BACKGROUND

When transmitting information on a physical communication channel, for instance a data channel and/or a control channel, of a communication network, physical resources to be used for the transmission need to be specified for such channel transmissions. Resource allocation in 5G NR for transmission of an uplink or downlink shared channel (PUSCH/PDSCH) may be divided into two parts: allocation in time and allocation in frequency domain. In previous communication standards (e.g., 3GPP standards 2G, 3G, 4G, and/or 5G), allocation in time was based on (e.g., physical) slots containing a fixed number (e.g., 12 or 14) of symbols in time (e.g., orthogonal frequency-division multiplexing, OFDM, symbols). In the future, it is expected that a wider variety of transmissions will be performed on physical communication channels. A specification of resources by slots may offer too little flexibility for allocating physical resources for future transmissions.

### SUMMARY OF SOME EXEMPLARY EMBODIMENTS

It has been recognized that physical resource allocation may in particular be challenging when a mobile device (e.g., a UE) is in a coverage shortage situation. In such scenarios, a UE may typically utilize its maximum transmission power (PC_max) for communication with the network node. Further, physical resources may be scheduled with a minimum modulation coding scheme, MCS, e.g., to maximize a coverage.

However, it has further been recognized, that for transmission of a certain transport block size (TBS), a certain amount of resources in time and frequency domain is necessary. TBS may in particular be determined at the UE, e.g., based on a scheduled (e.g., by a network node) modulation and coding scheme, MCS, and/or an allocated resource. Thereby, for an uplink (UL) transmission the UE may be forced to distribute its limited transmission power on a larger amount for resources when TBS increases. This becomes a problem especially in the cases where the power distribution occurs in the frequency domain (i.e., if more than one physical resource block, PRB, are scheduled in the frequency domain). In this case, the limited UE power is distributed over a larger bandwidth with consequently a larger noise power at the receiver end, thereby decreasing the received SNR at the network node. Consequently, the performance and coverage of the UL transmission (i.e. PUSCH) diminishes.

A countermeasure may for instance correspond to a repetition of a transmission. For instance a method of a repeated transmission of a physical channel (e.g., PUSCH repetitions) may be performed. A respective repetition occurs in different slots, i.e. in a current, fixed unit of physical resource allocation. Typically, the same allocation in time and frequency is replicated per slot, e.g., to recover energy lost in distributing the UE limited power on a larger bandwidth, e.g., due to a larger TBS.

Similarly, the problem of distributing an UE's limited transmission power on a larger bandwidth in case of large TBS, a mechanism referred to as transport block over multiple slots, TBoMS, may be considered. Herein, a certain TBS is spread across a number of slots, wherein the number is larger than 1. As a consequence, the UE is allowed to transmit the certain TBS using larger time domain resources rather than larger bandwidth.

From UE power point of view, using larger time domain resources (be it by repetition or by TBoMS) is effective for enhancing transmission success since a larger amount of energy is effectively transmitted towards the receiver end. However, both repetition and TBoMS features are only very limited specialized functions which are engineered based on the assumption that slots are the immutable basic unit of physical resource allocation. Thus, currently, a range of functionalities is restricted and thus, an achievable performance by a network using these techniques is limited.

Based on the above, methods are necessary for time domain physical resource allocation that go beyond current limited add-on features such as repetitions and TBoMS and instead introduce a new paradigm of temporal resource allocation that leaves legacy limitations behind and is suitable to achieve a higher degree of configurability, ideally in a unified framework, of time-domain resource allocation of a physical communication channel, e.g., in 6G.

It is thus, inter alia, an object of the disclosure to overcome the above limitations and improve resource allocation for physical channels in communication networks.

According to a first example aspect, a method is disclosed (e.g., performed and/or controlled by a first apparatus, e.g. UE) comprising:
- obtaining (e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups and a grouping of the OFDM symbol groups (e.g., or slots) into virtual slots;
- obtaining (e.g., dynamically, e.g., by DCI) a Time Domain Resource Allocation, TDRA, information (e.g., using a TDRA table) for a data (e.g., PDSCH, PUSCH) or control channel transmission;
- determining at least one resource allocation (e.g., slots, transport block size, encoding scheme, rate matching) for the data or control channel transmission based at least on the TDRA information and the grouping indication;
- performing and/or receiving the data or control channel transmission using the determined resource allocation.

According to a second example aspect, a method is disclosed (e.g., performed and/or controlled by a first apparatus, e.g. UE) comprising:
- obtaining (e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups;
- obtaining (e.g., dynamically, e.g., by DCI) a Time Domain Resource Allocation, TDRA, information (e.g., using a TDRA table) for a data (e.g., PDSCH, PUSCH) or control channel transmission;
- determining at least one resource allocation (e.g., slots, transport block size, encoding scheme, rate matching) for the data or control channel transmission based at least on the TDRA information and the grouping indication;
- performing and/or receiving the data or control channel transmission using the determined resource allocation.

According to a third example aspect, a method is disclosed (e.g., performed and/or controlled by a first apparatus, e.g. UE) comprising:
- obtaining (e.g., dynamically (e.g., by downlink control information, DCI,), semi-statically (e.g., by radio resource control, RRC) or by Medium Access Control, MAC, e.g., by a MAC Control Element, MAC-CE) a grouping indication indicating a grouping of OFDM symbols (e.g., or slots (e.g., physical slots)) into virtual slots;
- obtaining (e.g., dynamically, e.g., by DCI) a Time Domain Resource Allocation, TDRA, information (e.g., using a TDRA table) for a data (e.g., PDSCH, PUSCH) or control channel transmission;
- determining at least one resource allocation (e.g., slots, transport block size, encoding scheme, rate matching) for the data or control channel transmission based at least on the TDRA information and the grouping indication;
- performing and/or receiving the data or control channel transmission using the determined resource allocation.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a terminal device, e.g., a user equipment (UE). For instance, the method may be performed and/or controlled by using at least one processor of the electronic device.

According to a further example aspect, a computer program is disclosed, the computer program when executed by a processor causing an apparatus, for instance a server, a terminal device, e.g., a UE, to perform and/or control the actions of the method according to the first, second and/or third example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the first, second and/or third example aspect.

The means of the apparatus can be implemented in hardware and/or software. They may comprise for instance at least one processor for executing instructions for performing the required functions, at least one memory storing the instructions, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

A terminal device, e.g., a user equipment (UE), may for instance correspond to a mobile device such as for example a mobile phone, tablet, smartwatch, a laptop, a Personal Digital Assistant (PDA) device, a wearable, an Internet-of-Things (IOT) device, an IIOT (Industrial IOT) device, a vehicle and/or combinations thereof. Such a user equipment may also be referred to as user device.

A network node may correspond to a component of a communication network such as for instance a Base Transceiver Station (BTS), a nodeB, an evolved node B (eNB), a Next Generation NodeB (gNB), a distributed unit (DU), a central unit (CU) and/or combinations thereof.

The method according to the first, second and/or third example aspect (in the following "method" refers to all three example aspects) comprises obtaining a grouping indication indicating a grouping of OFDM symbols into OFDM symbol groups and a grouping of the OFDM symbol groups (e.g., or slots) into virtual slots.

A grouping may correspond to combination of at least two or more basic units (e.g., a respective unit of time domain resource allocation; e.g., at least one of a OFDM symbol or a slot) in a larger combined unit such as for instance an OFDM symbol group or a virtual slot. An OFDM symbol group may thus be defined as a grouping of (e.g., multiple) OFDM symbols. A virtual slot may be defined as a grouping of (e.g., multiple) slots (e.g., and/or OFDM symbols, e.g., based on slots). Virtual slots may additionally or alternatively be based on (e.g., defined by referencing to) OFDM symbol groups. A respective combined unit (e.g., OFDM symbol group and/or virtual slot) may be used for resource allocation. The combined unit may create an abstraction layer that enables technically manageable resource allocation, e.g., according to known principles (e.g., at least partially implemented in legacy technology), by referring to the newly introduced combined, abstracted unit instead of a (e.g., physical) unit of allocation such as for instance an OFDM symbol and/or a slot Thereby, resource allocation may be flexibly adapted to, e.g., requirements of a current transmission and/or to network capabilities and/or to network scenarios, such as e.g., low coverage scenarios. It will become clear in the following, for instance, a virtual slot size of at least two or more slots may lead to an emergence of resource allocation and/or transmission principles functionalities not dissimilar to TBoMS, yet without needing to specify TBoMS explicitly and without being limited to a specific variant.

The grouping indication may for instance correspond to and/or comprise at least one flag (e.g., a binary indicator such as a bit) indicating whether or not (e.g., any sort of) grouping (e.g., at least one of or all of a grouping of OFDM symbols into OFDM symbol groups and a grouping of the OFDM symbol groups into virtual slots and a grouping of OFDM symbols (e.g. or slots) into virtual slots) is to be performed. Additionally or alternatively, the grouping indication may indicate which type of grouping, e.g., whether a grouping of OFDM symbols into OFDM symbol groups or a grouping of the OFDM symbol groups into virtual slots or a grouping of OFDM symbols (e.g. or slots) into virtual slots (e.g., or all of them) is to be performed. Additionally or alternatively, the grouping indication may indicate at least one parameter of a grouping such as for instance at least one size of an OFDM symbol group and/or a size of a virtual slot.

A grouping of OFDM symbols into virtual slots may be specified as, e.g., a number of OFDM symbols within a virtual slot. Additionally or alternatively, slots may be used as a basis for defining a grouping of OFDM symbols into virtual slots. E.g., a grouping of OFDM symbols into virtual slots may be specified as a grouping of slots into virtual slots (e.g., a number of slots in a virtual slot). By a grouping of (e.g., physical) slots into virtual slots, a corresponding grouping of OFDM symbols into OFDM symbol groups may be implied.

An indication that a virtual slot size of one slot and/or that an OFDM symbol group size of one OFDM symbol may be used to indicate that no grouping is to be performed. Accordingly, a separate tag indicating whether or not to group may be omitted.

The grouping indication may for instance be indicated dynamically, e.g., by a downlink control information, DCI. Additionally or alternatively, the grouping indication may be indicated semi-statically, e.g., by radio resource control, RRC, signaling. Additionally or alternatively, the grouping indication may be indicated by Medium Access Control, MAC, e.g., by a MAC Control Element, MAC-CE. For instance, at least one aspect of the grouping indication (e.g., a grouping in general and/or a size parameter) may be indicated by a semi-static signaling while a further aspect (e.g., a grouping by OFDM symbol groups and/or a grouping by virtual slots and/or a size of at least one of OFDM symbol groups and/or virtual slots) may be indicated more dynamically, e.g., by DCI, or by a MAC-CE.

The method further comprises obtaining a Time Domain Resource Allocation, TDRA, information for a data or control channel transmission. The TDRA information may for instance define at least one or multiple time domain resource allocations, e.g., for scheduling at least one data and/or control channel, e.g., a PUSCH, PUCCH, PDSCH and/or PDCCH. The TDRA information may define a type of resource allocation and/or at least one or more parameters defining respective details of the resource allocation. The TDRA information may in particular define at least one of a mapping type, an offset value, a starting value or a length of allocated resources.

The TDRA information may define at least one property of a time-domain resource allocation, TDRA. Such a property of time-domain resource allocation may for instance comprise a starting point in time of a given allocated resource in time and/or a length of the given allocated resource in time. For instance, a starting point and/or a length may be indicated based on (e.g., by referring to) at least one basic unit of scheduling (e.g. at least one of OFDM symbols, slots, OFDM symbol groups, or virtual slots), e.g., referred to as a starting unit of scheduling. Additionally or alternatively, a starting point may be defined within the starting unit of scheduling, e.g., as an OFDM symbol within at least one of a starting slot, a starting OFDM symbol group, or a starting virtual slot, e.g., a slot within an OFDM symbol group, e.g., as a slot and/or an OFDM symbol group within a virtual slot. Additionally or alternatively, a starting point may be defined in relation to a reference point in time, e.g., a reception and/or transmission time of the TDRA information. Further information on time domain resource allocation such as for instance a mapping type, a number of repetitions, a number of basic units of scheduling to be used for a transmission across multiple units of scheduling (e.g. a length of the time domain resource allocation), a slot or a virtual slot where the transmission shall occur, a transport block size determination mode, a mapping mode and/or combinations thereof may be indicated by the TDRA information.

For instance, the TDRA information may comprise a reference to a set of multiple (e.g., pre-defined) TDRA properties (e.g., parameters and/or characteristics; e.g., at least one or more of the above properties (e.g., starting point, length, etc.)). For instance, a multitude of referenceable sets of TDRA properties may be termed a TDRA reference. A TDRA reference may be stored (e.g., at the apparatus performing and/or controlling the first example aspect) as a table, e.g., a TDRA table. A TDRA table may comprise multiple rows, wherein a respective row corresponds to a set of TDRA properties. A row may comprise at least one or more entries corresponding to mutually different TDRA properties (e.g., of the ones listed above) of the time-domain resource allocation. For instance, a row may indicate a respective value for at least one or more of a starting OFDM symbol group (e.g., or another basic unit of scheduling), a length in OFDM symbol groups (e.g., or another basic unit of scheduling), a virtual slot offset (e.g., based on and/or correspond to a basic offset unit of scheduling), a (e.g., PDSCH, PUSCH) mapping type, and/or a number of repetitions and/or number of virtual slots (e.g., or another basic unit of scheduling) for a transmission across multiple units of scheduling.

The TDRA information may for instance comprise and/or correspond to an index to at least one set of TDRA properties (e.g., in the case of a TDRA table, a TDRA information may comprise an index to a row of a TDRA table).

A TDRA reference (e.g., TDRA table) may for instance comprise (e.g., at least) 16, 32, 64,128, 256, or 512 sets of TDRA properties (e.g., rows of the TDRA table).

The TDRA information may comprise (e.g., at least or at most) 16, 32, 64,128, 256, 512,1024, 2048 references to sets of TDRA properties (e.g., indices to a respective row of the TDRA table).

The TDRA information (e.g., one or more indices to a respective set of TDRA properties; e.g., to a respective row in a TDRA table) may be transported in a respective (e.g., TDRA) information element. For instance, if an increased number of references to sets of TDRA properties (e.g., more than 16, 32, 64, 128, 256 or 512) are to be indicated by the TDRA information, at least a part of the TDRA information may be transported in an (e.g., unused) part of a frequency domain resource allocation, FDRA, information element.

The offset value may provide an offset relative to a basic unit of scheduling (e.g., a basic offset unit) (e.g., OFDM symbol, slot, OFDM slot group, virtual slot) to a reference point in time, e.g., to a basic unit of scheduling (e.g., OFDM symbol, slot, OFDM slot group, virtual slot) in which a corresponding scheduling signaling (e.g., a DCI) (e.g., indicating the TDRA information) was transmitted. For example, if a variable of n represents a basic unit of scheduling (e.g., OFDM symbol, slot, OFDM slot group, virtual slot) in which the scheduling signaling (e.g., DCI) was transmitted and a variable k represents an offset as indicated by the TDRA information, the data and/or control channel may be transmitted (e.g., begun to be transmitted) in a basic unit of scheduling (e.g., OFDM symbol, slot, OFDM slot group, virtual slot) indicated by n + k.

The starting value may specify a particular starting point as, e.g., an OFDM symbol, an OFDM symbol group and/or a slot within a basic unit of scheduling (e.g., a basic unit of allocation) (e.g., OFDM symbol, slot, OFDM slot group, virtual slot), for instance e.g., OFDM symbol 0, 1, 2, ...., or 13 of a (e.g., first) OFDM symbol group, e.g., of a scheduled data and/or control channel. For instance, the starting value may indicate, where in time the data and/or control channel transmission (e.g., PUSCH or PUCCH transmission) is scheduled to start. For instance, the starting value may indicate that a data channel transmission (e.g. PUSCH transmission) starts at OFDM symbol group 3 within a virtual slot. The length of allocated resources may define a number of basic units of scheduling (e.g., a basic unit of allocation) (e.g., OFDM symbol, slot, OFDM slot group, virtual slot) for the data and/or control channel transmission, e.g., starting from the starting value. For instance, the length of allocated resources may indicate that a data channel transmission (e.g. PUSCH transmission) occupies 5 OFDM symbol groups within a virtual slot. Additionally or alternatively, the starting value and the length of allocated resources may be indicated (e.g., jointly) as a Start and Length Indicator Value (SLIV).

The data and/or control channel may for instance correspond to and/or comprise a Physical Downlink Shared CHannel, PDSCH, Physical Downlink Control CHannel, PDCCH, Physical Uplink Shared CHannel, PUSCH, Physical Uplink Control CHannel, PUCCH.

The TDRA information may for instance be obtained dynamically, e.g., by a downlink control information, DCI. Additionally or alternatively, the TDRA information may be obtained at least partially semi-statically, e.g., by radio resource control, RRC. Additionally or alternatively, the TDRA information may be obtained by Medium Access Control, MAC, e.g., by a MAC Control Element, MAC-CE.

The TDRA information may indicate at least one aspect of a time domain resource allocation. The TDRA information may take a form of a single or multiple information elements, e.g., in a RRC signaling, a DCI and/or a MAC-CE. The TDRA information may take the shape of a list and/or table.

The grouping indication and the TDRA information may be obtained independently (e.g., separately) from one another, e.g., using a mutually different transmission types (e.g., chosen from RRC, DCI and/or MAC-CE). Alternatively, the grouping indication and the TDRA information may be obtained and/or signaled jointly, e.g., in a single message and/or in two dependent messages and/or using a same transmission type (e.g., RRC, DCI and/or MAC-CE). For example, the TDRA information and grouping indication may be included in a same TDRA Table or in a same information element.

The method further comprises determining at least one resource allocation for the data or control channel transmission based at least on the TDRA information and the grouping indication.

The resource allocation may for instance comprise a definition of a set of physical resources to use for the channel transmission. The determined set of physical resources may for instance be defined in terms of at least one of OFDM symbol groups or virtual slots. The determining of a resource allocation may take into account at least one further factor (e.g., in addition to the grouping indication and/or the TDRA information), for instance a numerology to use. Determining a resource allocation may for instance comprise determining at least one of an amount of data to transmit, a transport block size, TBS, at least one encoding scheme, a decision upon repeating at least a part of the channel transmission, selecting a redundancy version, RV, at least one aspect of a rate matching, and/or combinations thereof.

The method further comprises performing and/or receiving the data or control channel transmission using the determined resource allocation. For instance, a set of physical resources may be used to receive a channel (e.g., decode a channel). E.g., the method may be performed by a UE receiving a downlink channel on the allocated resources. Additionally or alternatively, a channel transmission may be performed using the allocated resources. E.g., if the method is to be performed by a UE, it may perform an uplink channel transmission on the allocated resources.

According to an embodiment of the first, second and/or third example aspect:
- the OFDM symbols are grouped into slots and the virtual slot comprises a number of OFDM symbol groups, wherein the number of OFDM symbol groups is equal to a number of OFDM symbols in a slot (e.g., 14 or 12), or
- the virtual slot comprises a number of slots, wherein the number of slots is equal to a number of OFDM symbols in an OFDM symbol group.

According to an embodiment of the first, second and/or third example aspect, OFDM symbols are grouped into (e.g., physical) slots. A physical slot may relate to a slot which has a fixed relation to physical resources, in particular to OFDM symbols. E.g., a grouping of OFDM symbols into slots may be pre-defined and/or fixed, e.g., throughout a respective communication standard and/or for a given channel transmission. For instance, there may be (e.g., fixed) number of OFDM symbols per slot, for instance at least one of 14 or 12 OFDM symbols per slot, e.g., depending on further factors such as for instance an extended or non-extended cyclic prefix.

The virtual slot (e.g., as indicated by the grouping indication) may comprise a number of OFDM symbol groups. For instance, such a number of comprised OFDM symbol groups within a virtual slot may correspond to (e.g., at least and/or at most) 1, 2, 3, 4, 5, 6, 7, 8, 9, 10, 11, 12, 13, 14, 15, 16, 17, 18, 19, 20, 21, 22, 23, 24, 25, 26, 27, 28 or more OFDM symbol groups. In particular, the number of OFDM symbol groups in a virtual slot may be equal to a number of OFDM symbols in a slot (e.g., 14 or 12). By keeping a number of OFDM symbol groups within a virtual slot identical to a number of symbols in a (e.g., physical, e.g., legacy) slot, a backwards compatibility of a signaling of resource allocations (e.g., by the TDRA information) may be achieved. For instance, a TDRA information (e.g., TDRA table) as may be known from 4G or 5G may be usable for resource allocation. Therein, a number of entries (e.g., according to a number of OFDM symbols in a slot, e.g., of a previous standard; e.g., 12 or 14) may be kept unchanged. For instance, instead of applying to 12 or 14 OFDM symbols, the TDRA information may be applied to 12 or 14 OFDM symbol groups.

Additionally or alternatively, according to an embodiment of the first, second and/or third example aspect, the virtual slots may comprise a number of slots. Similar to the disclosure above with respect to OFDM symbol groups, the number of slots within a virtual slot may be adjusted to a number of OFDM symbols within an OFDM symbol group. For instance, if an OFDM symbol group comprises 7 OFDM symbols, the virtual slot may comprise 7 slots (e.g., each comprising 12 or 14 OFDM symbols). By scaling OFDM symbols per OFDM symbol groups by a same factor as slots per virtual slot, resource allocation may be enabled in a particularly simple way, in particular a backwards compatible way. For instance, as detailed above, a same TDRA information may be used regardless of being applied to OFDM symbols or to OFDM symbol groups.

According to an embodiment of the first, second and/or third example aspect at least one of:
- the TDRA information is based on a basic unit of allocation in the time domain, and wherein the basic unit of allocation corresponds to:
   - an OFDM symbol (e.g., legacy; e.g., no grouping), or
   - an OFDM symbol group, or
- the TDRA information is based on a basic offset unit in the time domain, and wherein the basic offset unit correspond to
   - a (e.g., physical) slot, or
   - a virtual slot.

According to an embodiment of the first, second and/or third example aspect, the TDRA information is based on a basic unit of allocation in the time domain. For instance, the TDRA information may be usable to allocate resources based on at least one or more basic units of allocation. For instance, a same TDRA information may be applied (e.g., may be applicable) to at least two mutually different basic units of allocation, for instance, to both OFDM symbols and OFDM symbol groups.

The basic unit of allocation may correspond to an OFDM symbol. Such resource allocation (based on OFDM symbols) may be considered a legacy approach, wherein no grouping is applied. Additionally or alternatively, the basic unit of allocation may correspond to an OFDM symbol group, e.g., according to the grouping indication.

The basic unit of allocation may in particular be used to indicate at least one of a starting value or a length of allocated resources. For instance, the TDRA information may indicate that an allocated resource may start at a given basic unit of allocation (e.g., an OFDM symbol within a (e.g., a first scheduled and/or allocated) slot and/or an OFDM symbol group within a (e.g., a first scheduled and/or allocated) virtual slot) and/or that an allocated resource may have a certain length, i.e., may span a number of basic units of allocation, e.g., a number of OFDM symbols and/or a number of OFDM symbol groups.

According to an embodiment of the first, second and/or third example aspect, the TDRA information is based on a basic offset unit in the time domain. The basic offset unit may for instance be different from or may be identical to the basic unit of allocation. The basic offset unit may in particular be used to indicate (e.g., quantify) an offset as specified by the TDRA information. The basic offset unit may in particular correspond to either a (e.g., physical) slot or to a virtual slot. For instance, the TDRA information may indicate that an allocated resource may start at after a temporal offset specified by means of (e.g., as a single or multiple of) the basic offset unit, e.g., after at least one event, in particular after obtaining the TDRA information, e.g., by means of an allocation and/or scheduling signaling, in particular a DCI, e.g., a DCI in which the TDRA information is obtained.

According to an embodiment of the first, second and/or third example aspect the TDRA information provides at least one of
- an integer multiple of the basic unit of allocation for the data or control channel transmission or
- an integer multiple of the basic offset unit (e.g., as a starting point) (e.g., offset) for the data or control channel transmission.

According to an embodiment of the first, second and/or third example aspect, the TDRA information provides an integer multiple of the basic unit of allocation for the data or control channel transmission. The TDRA information may indicate, e.g., for a given purpose, e.g., for starting value and/or for a length of allocated resources, an integer (e.g., 1 or a) multiple of the basic unit of allocation. For instance, the integer multiple may be applicable to at least two mutually different basic units of allocation as detailed above (e.g., OFDM symbols and OFDM symbol groups).

According to an embodiment of the first, second and/or third example aspect, additionally or alternatively, the TDRA information provides an integer multiple of the basic offset unit as a starting point or a point in time of the data or control channel transmission. The starting point or the point in time may be different from a starting value and/or may in particular indicate a temporal offset from a signaling (e.g., DCI) carrying the TDRA information where the transmission shall be performed.

According to an embodiment of the first, second and/or third example aspect determining the at least one resource allocation comprises at least one of
- selecting the OFDM symbol or the OFDM symbol group as the basic unit of allocation based on the grouping indication, or
- selecting a (e.g., physical) slot or a virtual slot as the basic offset unit based on the grouping indication.

According to an embodiment of the first, second and/or third example aspect, determining the at least one resource allocation comprises selecting the OFDM symbol or the OFDM symbol group as the basic unit of allocation. Such selecting may in particular be based on the grouping indication, e.g., the grouping indication may indicate a basic unit of allocation.

According to an embodiment of the first, second and/or third example aspect, additionally or alternatively, determining the at least one resource allocation comprises selecting a (e.g., physical) slot or a virtual slot as the basic offset unit based on the grouping indication. Such selecting may in particular be based on the grouping indication, e.g., the grouping indication may indicate a basic offset unit.

According to an embodiment of the first, second and/or third example aspect, the method further comprises determining a Transport Block Size, TBS, based on a number and/or a size of OFDM symbol groups.

According to an embodiment of the first, second and/or third example aspect, the method further comprises obtaining an indication indicating a Transport Block Size, TBS, determination mode, wherein the TBS determination mode indicates whether a transport block size is calculated based on a number of OFDM symbols, or on a number of OFDM symbol groups, or on a number of virtual slots.

The method may further comprise obtaining an indication indicating a Transport Block Size, TBS, determination mode. The indication of a TBS determination mode may for instance be obtained as part of the grouping indication or the TDRA information or separately from both of them. The indication of a TBS determination mode may for instance be obtained by RRC, DCI and/or by MAC-CE.

The TBS determination mode may indicate how a transport block size is calculated, in particular, whether the TBS is calculated based on a number of OFDM symbols, or on a number of OFDM symbol groups, or on a number of virtual slots. A transport block, TB, may in particular refer to a data payload obtained from the medium access control, MAC, layer at the physical layer, PHY. The transport block size, TBS, indicates the amount of data (e.g., size of the data payload) to be transmitted in a given set of allocated resources.

For instance, the apparatus performing and/or controlling the method according to the first, second and/or third example aspect may determine the TBS at least partially based on (e.g., additionally to at least one of number of OFDM symbols, or on a number of OFDM symbol groups, or on a number of virtual slots) at least one of a number of resource elements, RE, a number of layers, a modulation order, a target code rate, and/or combinations thereof.

According to an embodiment of the first, second and/or third example aspect, determining at least one resource allocation comprises determining at least one TBS based on the grouping indication and the TBS determination mode.

For instance, the TBS may be determined at least based on whether grouping is indicated by the grouping indication and based on number of allocated OFDM symbol groups.

The TBS may be determined further based (e.g., additionally to being based on the grouping indication), on a TBS determination mode (e.g., indicated by a network entity, e.g., obtained by a first apparatus performing and/or controlling the method according to the first, second or third example aspect).

For instance, the grouping indication may indicate a first grouping (e.g., a grouping to be performed with an OFDM symbol group size of 7 OFDM symbols per group and/or with a virtual slot size of 7 slots) wherein the TBS determination mode may indicate a TBS determination based on a second grouping, wherein the first and the second grouping may be different. For instance, the TBS determination mode may indicate a TBS determination without grouping (e.g., with an equivalent OFDM symbol group size of 1 OFDM symbol per OFDM symbol group and/or 1 slot per virtual slot) or with a differently sized grouping (e.g., less or more OFDM symbols per OFDM symbol group and/or less or more slots per virtual slot than indicated by the grouping indication).

For instance, a TBS may be determined based on a number of resources that is smaller than an allocated resource in time, e.g. by an integer factor of at least 2, e.g., by a factor corresponding to the size of the OFDM symbol group (e.g., given a modulation and coding scheme, MCS and/or given a first code rate) indicated by the grouping indication and/or the virtual slot size, e.g., as indicated by the TBS determination mode. For instance, in this case, a code rate of the channel transmission may be increased (less parity bits) to match the allocated resource to the TBS.

Note that as a result, the proposed methods may automatically and without needing to specify it explicitly, encompass repetitions of transport blocks. In particular, a repetition may be performed (e.g., automatically) without varying a redundancy version across repetitions.

For instance, a TBS may be determined based on a number of resources that is larger than an allocated resource in time, e.g. by an integer factor of at least 2, e.g., by a factor corresponding the virtual slot size as indicated by the TBS determination mode and/or to the size of the OFDM symbol group size indicated by the grouping indication. In particular in this case, data from the MAC layer, for the which the TBS has been allocated may be transmitted distributedly across multiple channel transmissions and/or across multiple virtual slots in time. Such distributed transmission may be performed automatically, e.g., by the apparatus performing and/or controlling the method according to the first, second and/or third example aspect.

For instance, the TBS may be determined (e.g., based on the TBS determination mode) at least based on whether grouping is indicated by the grouping indication and based on the number of allocated OFDM symbol groups. For instance, the grouping indication may indicate a first grouping (e.g., be it a grouping of OFDM symbols into OFDM symbol groups or a grouping of slots into virtual slots) and the TDRA information may indicate a length of the resource allocation of one or multiple, for instance 3, OFDM symbol groups, so that the TBS is determined based on the indicated length of the resource allocation of the one or the multiple, for instance 3, OFDM symbol groups. The TBS determination mode may for instance indicate this approach of TBS determination as a default mode or this approach of TBS determination may be assumed (e.g. specified) if the TBS determination mode is not indicated.

For instance, the TBS may (e.g., additionally or alternatively) be (e.g., further) determined (e.g., based on the TBS determination mode) based on what size a respective group has (e.g., be it a grouping of OFDM symbols into OFDM symbol groups (e.g., OFDM symbol group size) or a grouping of slots into virtual slots (e.g., virtual slot size)). For instance, the grouping indication may indicate a first grouping (e.g., be it a grouping of OFDM symbols into OFDM symbol groups or a grouping of slots into virtual slots), wherein for instance a size of an OFDM symbol group is a first multiple (e.g., 4) OFDM symbols, and the TDRA information indicates a length of the resource allocation of another, second multiple of (e.g., 3) OFDM symbol groups. In this case, the TBS may be determined based on the indicated length of the allocation of the first multiple (e.g., 3) OFDM symbol groups and based on the size of each OFDM symbol group (e.g., the first multiple, e.g., 4 OFDM symbols). The TBS determination mode may for instance indicate this approach of TBS determination as a second mode, e.g., as an alternative to the default mode. This approach of TBS determination may be assumed (e.g. specified) if the TBS determination mode is not indicated.

According to an embodiment of the first, second and/or third example aspect, the method further comprises obtaining an indication indicating a mapping mode, wherein the mapping mode determines a mapping of a transport block onto the at least one determined resource allocation.

On the one hand, an allocated resource has been determined, e.g., based on the grouping indication and the TDRA information. On the other hand, a TBS has been determined, e.g., based on the TBS determination mode or based on an assumed mode of TBS determination (e.g. specified). A further determination may be carried out by which the TBS is mapped to the allocated resources. It is thus further proposed to obtain an indication of a mapping mode guiding such mapping. The indication of a mapping mode may for instance be obtained as part of the grouping indication or the TDRA information or the TBS determination mode or separately from them. The indication of a mapping mode may for instance be obtained by RRC, DCI and/or by MAC-CE.

The mapping mode may determine a mapping of a transport block (e.g., according to the determined transport block size) onto the at least one determined resource allocation. The mapping may in particular relate to a redundancy version, e.g., to be used by a hybrid automatic repeat request, HARQ, procedure.

A redundancy version indicates a version of coded data to be transmitted, wherein different version of the same data may have been created in pre-processing. For instance, data bits to be transmitted may be encoded, e.g., using a forward error correction, FEC, scheme (e.g., an example scheme may be a low density parity check code, LDPC). The encoded bits may then be processed by removing at least one or more parity bits obtained through FEC by a rate-matching. This way, a set of rate matched output bits for transmission is created. The redundancy version may in particular determine which bits are (which redundancy version is) selected for transmission. A different redundancy version will result in a different set of bits (e.g., based on the same data) to be transmitted.

A typical approach to obtaining different redundancy versions is a circular buffer. A respective redundancy version will for instance provide a different portion of a rate-matched output. In a consequence, when repeating a transmission with either a constant or a varied RV, chances of a successful decoding at the receiver may be enhanced in different ways. By keeping the redundancy version constant, a signal to noise ratio may be enhanced (e.g., through repetition). By varying the redundancy version, more parity bits may be transmitted, enabling error correction even in case of incomplete decoding at the receiver side of a given transmission.

According to an embodiment of the first, second and/or third example aspect, the mapping mode determines at least one of:
- whether a redundancy version, RV, is kept constant across a number of OFDM symbols, or across a number of OFDM symbol groups, or across a number of virtual slots;
- whether a redundancy version, RV, is kept constant within one or more OFDM symbol groups or within one or more virtual slots;
- whether an RV is varied across a number of OFDM symbols, or across a number of OFDM symbol groups, or across a number of virtual slots; or
- whether an RV is varied within one or more OFDM symbol groups or within one or more virtual slots (e.g., an RV is varied within one virtual slot and changed at (e.g., each) (e.g., physical) slot).

According to an embodiment of the first, second and/or third example aspect, the mapping mode indicates whether a redundancy version, RV, is kept constant across a number of OFDM symbols (e.g., within a slot, within an OFDM symbol group or within a virtual slot), or across a number of OFDM symbol groups (e.g., within a virtual slot), or across a number of virtual slots (e.g., when multiple virtual slots are used for a transmission, e.g., when a transmission is repeated across multiple virtual slots, and/or e.g., when the TBS as determined by the TBS determination mode is larger than the resource allocated according to the grouping indication and the TDRA information allows).

According to an embodiment of the first, second and/or third example aspect, the mapping mode indicates whether a redundancy version, RV, is kept constant within one or more OFDM symbol groups (i.e., for the (e.g., all) OFDM symbols within the OFDM symbol group, RV is constant) or within one or more virtual slots (e.g., for the (e.g., all) OFDM symbol groups and/or OFDM symbols within the virtual slot, RV is constant at a single value).

For instance, when a RV is kept constant within one or more instances of an allocation unit (e.g., OFDM symbol group, slot, and/or virtual slot) the RV is kept constant in every one of the one or multiple allocation units. At the same time, RV may still vary across the allocation units. E.g., a first OFDM group (e.g., or slot, and/or virtual slot) may carry RV=0, the next OFDM symbol group (e.g., or slot, and/or virtual slot) may carry RV=2. For instance, a (e.g., pre-defined) cycling order of RVs such as 0,2,3,1 or 0,3,0,3 may be followed.

According to an embodiment of the first, second and/or third example aspect, the mapping mode indicates whether a redundancy version, RV, is varied across a number of OFDM symbols (e.g., within a slot, within an OFDM symbol group or within a virtual slot), or across a number of OFDM symbol groups (e.g., within a virtual slot), or across a number of virtual slots (e.g., when multiple virtual slots are used for a transmission, e.g., when the TBS as determined by the TBS determination mode is larger than the resource allocated according to the grouping indication and the TDRA information allows). The RV may be varied at a certain, e.g., predefined, granularity, e.g., after every transmitted OFDM symbol, after a pre-defined number of OFDM symbols, after a OFDM symbol group, after a pre-defined number of OFDM symbol groups, after every slot, after a pre-defined number of slots, after every virtual slot, and/or after a pre-defined number of virtual slots.

According to an embodiment of the first, second and/or third example aspect, the mapping mode indicates whether a redundancy version, RV, is varied within one or more OFDM symbol groups (i.e., for the (e.g., all) OFDM symbols within the OFDM symbol group) or within one or more virtual slots (e.g., for the (e.g., all) OFDM symbol groups and/or OFDM symbols within the virtual slot). The RV may be varied at a certain, e.g., predefined, granularity, e.g., after every transmitted OFDM symbol, after a pre-defined number of OFDM symbols, after a OFDM symbol group, after a pre-defined number of OFDM symbol groups, after every slot, and/or after a pre-defined number of slots.

According to an embodiment of the first, second and/or third example aspect, the mapping mode determines that a redundancy version, RV, is cycled according to at least one of:
- RV cycling per OFDM symbol groups,
- RV cycling per slot,
- RV cycling per group of slots,
- RV cycling per virtual slot, or
- RV cycling per group of virtual slots.

A granularity of RV cycling may be set to at least one of the above. A cycling may in particular refer to an iterating through RVs, e.g., in a predefined order (e.g., ascending order), e.g., such as a repetition of the sequence of RVs 0,1,2,3 (or 0,3,1,2 or 0,2,3,1 or 0,3,0,3). I.e., after an RV=3 (or 2 or 1 or 3 respectively), the sequence restarts at RV=0. The quantity by which the RV is cycled may be determined, e.g., based on the grouping indication, the mapping mode, the TBS determination mode, the TDRA information and/or combinations thereof. A group of either slots or virtual slots may be determined, e.g., based on the grouping indication, the mapping mode, the TBS determination mode, the TDRA information and/or combinations thereof, and/or may be pre-defined. For instance, an RV cycling may be done after 2, 3, 4, 5, 6, 7, 8, 9, 10, 12, 14, or more slots and/or virtual slots. For instance, an RV cycling may be done per OFDM symbol group or per a number (e.g. 2, 3, 4, 5, 6, 7, 8, 9, 10, 12, 14) of OFDM symbol groups.

According to an embodiment of the first, second and/or third example aspect, the grouping indication comprises at least one of
- an indication whether determining at least one resource allocation is based on OFDM symbol groups and/or virtual slots (e.g., or not) or
- an indication of grouping characteristics (e.g., a respective size) of the OFDM symbol groups or the virtual slots.

The grouping indication may indicate that a grouping (e.g., of OFDM symbols into OFDM symbol groups and/or of slots and/or OFDM symbol groups into virtual slots) is performed or alternatively that grouping is not performed, e.g., when determining a resource allocation. Such indication may be for instance implemented as a flag (e.g., by an information element; e.g., a bit) and/or by a size indication of a respective grouping of 1, e.g., wherein a OFDM symbol group size of 1 OFDM symbol and/or a virtual slot size of 1 slot may be indicative of no grouping to be performed.

The grouping indication may indicate whether (1) a grouping of OFDM symbols into OFDM symbol groups is to be performed or (2) a grouping of OFDM symbol groups or slots into virtual slots or a grouping of OFDM symbols into slots is to be performed and/or whether (3) both a grouping of OFDM symbols into OFDM symbol groups and a grouping of OFDM symbol groups or slots into virtual slots or a grouping of OFDM symbols into slots is to be performed.

The grouping indication may further indicate at least one grouping characteristic of e.g., OFDM symbol groups and/or virtual slots. A grouping characteristic may in particular relate to a size, e.g., of a number of OFDM symbols into OFDM symbol groups and/or of a number of slots and/or a number of OFDM symbol groups into virtual slots and/or a number of OFDM symbols into virtual slots.

According to an embodiment of the first, second and/or third example aspect, obtaining the grouping indication comprises receiving the grouping indication from a network node (e.g., dynamically (e.g., by downlink control information, DCI), semi-statically (e.g., by radio resource control, RRC) or by Medium Access Control, MAC, e.g., by a MAC Control Element, MAC-CE), and in response to receiving the grouping indication, determining grouping characteristics (e.g., of the virtual slot and/or the OFDM symbol groups) based on the grouping indication (e.g., based on an indication of a physical quantity (e.g., signal to noise ratio, (e.g., latest) power headroom report) (e.g., based on a mapping table).

For instance, at least one characteristic, e.g., a size of an OFDM symbol group and/or virtual slot, may be determined at least partially on a physical quantity such as for instance a (e.g., current) signal to noise ratio, (e.g., latest) power headroom report (e.g., as obtained from a network node), e.g., based on further factors such as for instance an association between the physical quantity and a respective size (e.g., a mapping table, e.g., pre-defined and/or received).

According to an embodiment of the first, second and/or third example aspect
- the grouping of OFDM symbols into OFDM symbol groups is determined based on the grouping of the OFDM symbol groups into virtual slots, or
- the grouping of the OFDM symbol groups into virtual slots is determined based on the grouping of OFDM symbols into OFDM symbol groups.

For instance, grouping of OFDM symbols into OFDM symbol group may be related to a grouping of OFDM symbol groups and/or slots into virtual slots and, e.g., vice versa. The method may thus comprise determining one of the two groupings based on the other. The term grouping may here denote whether or not to group (e.g., OFDM symbol group size/ virtual slot size of 1 may mean no grouping while a size above 1 may indicate grouping) and/or may denote a certain size (e.g., OFDM symbol group size and/or virtual slot size).

According to an embodiment of the first, second and/or third example aspect, the grouping of OFDM symbols into OFDM symbol groups is indicated (e.g., obtained) as at least one of:
- a number of OFDM symbols,
- a multiple of a slot or of a fraction of a slot,
- a multiple of a subframe or of a fraction of a subframe, or
- a multiple of a frame or of a fraction of a frame.

For instance, the grouping of OFDM symbols into OFDM symbol groups may be defined in various ways. In particular, a given size of an OFDM symbol group may be defined as a number of OFDM symbols, e.g., in an OFDM symbol group. For instance, it may be indicated that 1, 2, 3, 4, 5, 6, 7, 8, 9, 10,11,12, 13, or 14 (, e.g., multiplied respectively by at least one of 2, 3, 4, 5, 6 or more), OFDM symbols are contained by a given OFDM symbol group.

Additionally or alternatively, the grouping of OFDM symbols into OFDM symbol groups is indicated (e.g., obtained) as a multiple of a slot or (e.g., a multiple) of a fraction of a slot. For instance, the OFDM symbol group size may be indicated as half a slot (e.g., equivalent to 6 or 7 OFDM symbols) and/or as another fraction, e.g., an integer fraction of 1/p, wherein p is an integer. In some cases, p may for instance be a prime factor of (e.g., an integer multiple of) 12 or 14 (e.g., or 1), i.e., (for 12 or 14) at least one of (e.g., 1 or 2, 3, 4, 6, or 7). Additionally or alternatively, non-integer fractions, e.g., of equal or unequal size, may be considered, e.g., multiple (e.g., four) fractions of 3, 4, 3, 4 OFDM symbols of a slot of 14 OFDM symbols. The OFDM symbol group size may for instance be indicated as a multiple of such a fraction, e.g., n/p, wherein n may assume at least one of 1, 2, 3, 4, 5, 6, 7, 8, 9, 10, 11, 12, 13, or 14, e.g., multiplied respectively by at least one of 2, 3, 4, 5, 6 or more.

OFDM symbol group size may also be indicated relative to either a subframe or a frame. A frame may for instance correspond to a radio frame of 10ms and a subframe may for instance correspond to a part of a radio frame of duration 1ms. Depending on numerology, a different number of slots may be transmitted in one subframe, e.g., 1 to 16 slots per subframe.

There may be one, e.g., fixed size, for OFDM symbol groups indicated by the grouping indication or alternatively at least two or more indicated OFDM symbol group sizes.

According to an embodiment of the first, second and/or third example aspect, the grouping of the OFDM symbol groups (e.g., or slots) into virtual slots is indicated as at least one of
- a number of OFDM symbol groups (e.g., 1, 2, 3, 4, 5, 6, 7, 8, 9, 10, 11, 12, 13, or 14),
- a number of slots (e.g., 1, 2, 3, 4, 5, 6, 7, 8, 9, 10, 11, 12, 13, or 14),
- a (e.g., integer) multiple of (e.g., a size of a respective of) a slot or of a fraction of a slot,
- a (e.g., integer) multiple of (e.g., a size of a respective of) a subframe or of a fraction of a subframe, or
- a (e.g., integer) multiple of (e.g., a size of a respective of) a frame or of a fraction of a frame.

According to an embodiment of the first, second and/or third example aspect, determining at least one resource allocation comprises determining a set of scheduled OFDM symbol groups within at least one virtual slot (e.g., OFDM symbol groups act as basic scheduling unit).

The set of scheduled OFDM symbol groups may for instance characterize the allocated physical resources. The data may thus be sent within the set of scheduled OFDM symbol groups.

There may be one, e.g., fixed size, for virtual slots indicated by the grouping indication or alternatively at least two or more indicated virtual slot sizes.

According to an embodiment of the first, second and/or third example aspect, the virtual slot comprises at least one of:
- at least two or more consecutive (e.g., immediately succeeding) slots or fractions of a slot,
- at least two or more separated (e.g., in time) slots or fractions of a slot.

Within the allocated resource, e.g., within the set of scheduled OFDM symbol groups, there may for instance exist (e.g., be comprised) at least two consecutive (e.g., contiguous) slots or fractions of slots. E.g., the allocated resource may partially be located immediately adjacent (e.g., with no intermediate (e.g., uplink and/or downlink) transmission and/or unused resource in time between them) to one another in time. Similarly, at least two or more OFDM symbols or symbol groups or even virtual slots of the allocated resources (e.g., corresponding to a set of scheduled OFDM symbol groups) may be contiguous in time.

Additionally or alternatively, within the allocated resource, e.g., within the set of scheduled OFDM symbol groups, there may for instance exist (e.g., be comprised) at least two or more separated (e.g., non-contiguous) slots or fractions of slots. E.g., the allocated resources may partially be distanced from one another in time (e.g., there may be at least one gap in time in the allocated resources, e.g., at least between two parts of the allocated resources, there may either be a transmission (e.g., in a same and/or overlapping frequency resource and/or an unused resource in time). Similarly, at least two or more OFDM symbols or symbol groups or even virtual slots of the allocated resources (e.g., corresponding to a set of scheduled OFDM symbol groups) may be non-contiguous in time. The allocated resources may thus span across multiple (e.g., at least two) uplink, UL, and/or downlink, DL, periods which are mutually separated in time by, e.g., an intermediate transmission and/or an unused time span.

By allowing such gaps in time within one allocated set of resources, the resource allocation is particularly flexible. Through abstraction to, e.g., a virtual slot and/or an OFDM group, such details of the physical implementation of a given transmission may be obscured to a scheduling logic, thus keeping the added complexity of the flexible allocation manageable for scheduling.

According to an embodiment of the first, second and/or third example aspect, the set of scheduled OFDM symbol groups (e.g., and/or the allocated resources) comprises at least one of:
- an OFDM symbol group located entirely inside a single slot of the virtual slot,
- an OFDM symbol group spanning across at least two slots, or
- an OFDM symbol group spanning across at least two slots, wherein the at least two slots are
   - consecutive, or
   - separated from one another (e.g., in time).

OFDM symbol groups may be scheduled independent of slot boundaries. OFDM symbol groups may in particular be located within a single slot or virtual slot, yet may also span across multiple slots and/or virtual slots. Such multiple slots may in particular be consecutive (e.g., contiguous in time) or separated from one another in time.

Virtual slots may be independent from slot boundaries in a same way as OFDM symbol groups.

According to a fourth example aspect, a method is disclosed (e.g., performed and/or controlled by a second apparatus, e.g. a network node) comprising:
- providing (e.g., and/or obtaining) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups and a grouping of the OFDM symbol groups (e.g., or slots) into virtual slots;
- providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH or PUSCH) or control channel transmission;
- determining (e.g., scheduling) at least one resource allocation (e.g., slots, transport block size, encoding scheme, rate matching) for the data (e.g., PDSCH, PUSCH) or control channel transmission based at least on the TDRA information and the grouping indication;
- performing and/or receiving the data or control channel transmission using the determined resource allocation.

According to a fifth example aspect, a method is disclosed (e.g., performed and/or controlled by a second apparatus, e.g. a network node) comprising:
- providing (e.g., and/or obtaining) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups;
- providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH or PUSCH) or control channel transmission;
- determining (e.g., scheduling) at least one resource allocation (e.g., slots, transport block size, encoding scheme, rate matching) for the data (e.g., PDSCH or PUSCH) or control channel transmission based at least on the TDRA information and the grouping indication;
- performing and/or receiving the data or control channel transmission using the determined resource allocation.

According to a sixth example aspect, a method is disclosed (e.g., performed and/or controlled by a second apparatus, e.g. a network node) comprising:
- providing (e.g., and/or obtaining) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols (e.g., or (e.g., physical) slots) into virtual slots;
- providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH or PUSCH) or control channel transmission;
- determining (e.g., scheduling) at least one resource allocation (e.g., slots, transport block size, encoding scheme, rate matching) for the data (e.g., PDSCH or PUSCH) or control channel transmission based at least on the TDRA information and the grouping indication;
- performing and/or receiving the data or control channel transmission using the determined resource allocation.

This method may for instance be performed and/or controlled by an apparatus, for instance a server. Alternatively, this method may be performed and/or controlled by more than one apparatus, for instance a server cloud comprising at least two servers. Alternatively, the method may for instance be performed and/or controlled by an electronic device, e.g. a node in a communication system, e.g., a base station or gNB. For instance, the method may be performed and/or controlled by using at least one processor of the electronic device.

According to a further example aspect, a computer program is disclosed, the computer program when executed by a processor causing an apparatus, for instance a server, a network node, e.g., a gNB, to perform and/or control the actions of the method according to the fourth, fifth and/or sixth example aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-(e.g., Only) Memory (ROM) or hard disk of a computer, or be intended for distribution of the program, like an optical disc.

According to a further example aspect, an apparatus is disclosed, configured to perform and/or control or comprising respective means for performing and/or controlling the method according to the fourth, fifth and/or sixth example aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

The above-disclosed apparatus according to any aspect may be a module or a component for a device, for example a chip. Alternatively, the disclosed apparatus according to any aspect may be a device, for instance a server or server cloud. The disclosed apparatus according to any aspect may comprise (e.g., only) the disclosed components, for instance means, processor, memory, or may further comprise one or more additional components.

All features disclosed with respect to the first, second and/or third example aspect are disclosed for the fourth, fifth and/or sixth example aspect and vice versa, where applicable.

The method according to the fourth, fifth and/or sixth example aspect may in particular be performed by a network node.

The network node may use a similar and/or same approach to determining a resource allocation in time. Both for uplink (mobile terminal to network node) and downlink (network node to mobile terminal) channel transmissions, the allocated resources need to be known to both network node and mobile terminal. Thus, both may apply the same principle of allocation.

For instance, when the method according to the fourth, fifth and/or sixth example aspect specifies that a grouping indication is provided, this may denote providing it to the mobile terminal. Additionally or alternatively, when the method according to the fourth, fifth and/or sixth example aspect specifies that the grouping indication is obtained, this may (e.g., like in the first, second and/or third example aspect) relate to retrieving the grouping indication from a memory, for instance in order to perform a correct method of resource allocation, e.g., according to a grouping indication previously provided to a respective mobile terminal.

According to an embodiment of the fourth, fifth and/or sixth example aspect:
- the OFDM symbols are grouped into slots and the virtual slot comprises a number of OFDM symbol groups, wherein the number of OFDM symbol groups is equal to a number of OFDM symbols in a slot (e.g., 14 or 12), or
- the virtual slot comprises a number of slots, wherein the number of slots is equal to a number of OFDM symbols in an OFDM symbol group.

According to an embodiment of the fourth, fifth and/or sixth example aspect, the method further comprises at least one of:
- the TDRA information is based on a basic unit of allocation in the time domain, and wherein the basic unit of allocation corresponds to:
- an OFDM symbol (e.g., legacy; e.g., no grouping), or
- an OFDM symbol group, or
- the TDRA information is based on a basic offset unit in the time domain, and wherein the basic offset unit correspond to
- a (e.g., physical) slot, or
- a virtual slot.

According to an embodiment of the fourth, fifth and/or sixth example aspect, the TDRA information provides at least one of
- an integer multiple of the basic unit of allocation for the data or control channel transmission or
- an integer multiple of the basic offset unit (e.g., as a starting point) for the data or control channel transmission.

According to an embodiment of the fourth, fifth and/or sixth example aspect, determining the at least one resource allocation comprises at least one of
- selecting the OFDM symbol or the OFDM symbol group as the basic unit of allocation based on the grouping indication, or
- selecting a (e.g., physical) slot or a virtual slot as the basic offset unit based on the grouping indication.

According to an embodiment of the fourth, fifth and/or sixth example aspect, the method further comprises determining a Transport Block Size, TBS, based on a number and/or a size of OFDM symbol groups.

According to an embodiment of the fourth, fifth and/or sixth example aspect, the method further comprises obtaining an indication indicating a Transport Block Size, TBS, determination mode, wherein the TBS determination mode indicates whether a transport block size is calculated based on a number of OFDM symbols, or on a number of OFDM symbol groups, or on a number of virtual slots.

According to an embodiment of the fourth, fifth and/or sixth example aspect, determining at least one resource allocation comprises determining at least one TBS based on the grouping indication and the TBS determination mode.

According to an embodiment of the fourth, fifth and/or sixth example aspect, the method further comprises obtaining an indication indicating a mapping mode, wherein the mapping mode determines a mapping of a transport block onto the at least one determined resource allocation.

According to an embodiment of the fourth, fifth and/or sixth example aspect, the mapping mode determines at least one of:
- whether a redundancy version, RV, is kept constant across a number of OFDM symbols, or across a number of OFDM symbol groups, or across a number of virtual slots;
- whether a redundancy version, RV, is kept constant within one or more OFDM symbol groups or within one or more virtual slots;
- whether an RV is varied across a number of OFDM symbols, or across a number of OFDM symbol groups, or across a number of virtual slots; or
- whether an RV is varied within one or more OFDM symbol groups or within one or more virtual slots.

According to an embodiment of the fourth, fifth and/or sixth example aspect, the mapping mode determines that a redundancy version, RV, is cycled according to at least one of:
- RV cycling per OFDM symbol groups,
- RV cycling per slot,
- RV cycling per group of slots,
- RV cycling per virtual slot, or
- RV cycling per group of virtual slots.

According to an embodiment of the fourth, fifth and/or sixth example aspect, the method further comprises the grouping indication comprises at least one of
- an indication whether determining at least one resource allocation is based on OFDM symbol groups and/or virtual slots (e.g., or not) or
- an indication of grouping characteristics (e.g., a respective size) of the OFDM symbol groups or the virtual slots.

According to an embodiment of the fourth, fifth and/or sixth example aspect, obtaining the grouping indication comprises receiving the grouping indication from a mobile terminal (e.g., dynamically (e.g., by downlink control information, DCI), semi-statically (e.g., by radio resource control, RRC) or by Medium Access Control, MAC, e.g., by a MAC Control Element, MAC-CE).

According to an embodiment of the fourth, fifth and/or sixth example aspect:
- the grouping of OFDM symbols into OFDM symbol groups is determined based on the grouping of the OFDM symbol groups into virtual slots, or
- the grouping of the OFDM symbol groups into virtual slots is determined based on the grouping of OFDM symbols into OFDM symbol groups.

According to an embodiment of the fourth, fifth and/or sixth example aspect, the grouping of OFDM symbols into OFDM symbol groups is indicated as at least one of:
- a number of OFDM symbols,
- a multiple of a slot or of a fraction of a slot,
- a multiple of a subframe or of a fraction of a subframe, or
- a multiple of a frame or of a fraction of a frame.

According to an embodiment of the fourth, fifth and/or sixth example aspect, the grouping of the OFDM symbol groups (e.g., or slots) into virtual slots is indicated as at least one of
- a number of OFDM symbol groups,
- a number of slots,
- a (e.g., integer) multiple of (e.g., a size of a respective of) a slot or of a fraction of a slot,
- a (e.g., integer) multiple of (e.g., a size of a respective of) a subframe or of a fraction of a subframe, or
- a (e.g., integer) multiple of (e.g., a size of a respective of) a frame or of a fraction of a frame.

According to an embodiment of the fourth, fifth and/or sixth example aspect, determining at least one resource allocation comprises determining a set of scheduled OFDM symbol groups within at least one virtual slot (e.g., OFDM symbol groups act as basic scheduling unit).

According to an embodiment of the fourth, fifth and/or sixth example aspect, the virtual slot comprises at least one of:
- at least two or more consecutive (e.g., immediately succeeding) slots or fractions of a slot,
- at least two or more separated (e.g., in time) slots or fractions of a slot.

According to an embodiment of the fourth, fifth and/or sixth example aspect, a set of scheduled OFDM symbol groups comprises at least one of:
- an OFDM symbol group located entirely inside a single slot of the virtual slot,
- an OFDM symbol group spanning across at least two slots, or
- an OFDM symbol group spanning across at least two slots, wherein the at least two slots are
   - consecutive, or
   - separated from one another (e.g., in time).

According to a seventh example aspect, a method is disclosed comprising:
- by a first apparatus (e.g., a mobile device):
   - obtaining (e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups and a grouping of the OFDM symbol groups (e.g., or slots) into virtual slots;
   - obtaining (e.g., dynamically, e.g., by DCI) a Time Domain Resource Allocation, TDRA, information (e.g., using a TDRA table) for a data (e.g., PDSCH, PUSCH) or control channel transmission;
   - determining at least one resource allocation (e.g., slots, transport block size, encoding scheme, rate matching) for the data or control channel transmission based at least on the TDRA information and the grouping indication;
   - performing and/or receiving the data or control channel transmission using the determined resource allocation; and
- by a second apparatus (e.g., a network node):
   - providing (e.g., to the first apparatus) (e.g., and/or obtaining) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups and a grouping of the OFDM symbol groups (e.g., or slots) into virtual slots;
   - providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH, PUSCH) or control channel transmission;
   - determining (e.g., scheduling) at least one resource allocation (e.g., slots, transport block size, encoding scheme, rate matching) for the data (e.g., PDSCH, PUSCH) or control channel transmission based at least on the TDRA information and the grouping indication;
   - performing and/or receiving the data or control channel transmission (e.g., from or to the first apparatus) using the determined resource allocation.

According to an eighth example aspect, a method is disclosed comprising:
- by a first apparatus (e.g., a mobile device):
   - obtaining (e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups;
   - obtaining (e.g., dynamically, e.g., by DCI) a Time Domain Resource Allocation, TDRA, information (e.g., using a TDRA table) for a data (e.g., PDSCH, PUSCH) or control channel transmission;
   - determining at least one resource allocation (e.g., slots, transport block size, encoding scheme, rate matching) for the data or control channel transmission based at least on the TDRA information and the grouping indication;
   - performing and/or receiving the data or control channel transmission using the determined resource allocation; and
- by a second apparatus (e.g., a network node):
   - providing (e.g., and/or obtaining) (e.g., to the first apparatus) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols into OFDM symbol groups;
   - providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH, PUSCH) or control channel transmission;
   - determining (e.g., scheduling) at least one resource allocation (e.g., slots, transport block size, encoding scheme, rate matching) for the data (e.g., PDSCH, PUSCH) or control channel transmission based at least on the TDRA information and the grouping indication;
   - performing and/or receiving the data or control channel transmission (e.g., from or to the first apparatus) using the determined resource allocation.

According to a ninth example aspect, a method is disclosed comprising:
- by a first apparatus (e.g., a mobile device):
   - obtaining (e.g., dynamically (e.g., by downlink control information, DCI), semi-statically (e.g., by radio resource control, RRC) or by Medium Access Control, MAC, e.g., by a MAC Control Element, MAC-CE) a grouping of OFDM symbols (e.g., or slots (e.g., physical)) into virtual slots;
   - obtaining (e.g., dynamically, e.g., by DCI) a Time Domain Resource Allocation, TDRA, information (e.g., TDRA table) for a data (e.g., PDSCH, PUSCH) or control channel transmission;
   - determining at least one resource allocation (e.g., slots, transport block size, encoding scheme, rate matching) for the data or control channel transmission based at least on the TDRA information and the grouping indication;
   - performing and/or receiving the data or control channel transmission using the determined resource allocation; and
- by a second apparatus (e.g., a network node):
   - providing (e.g., and/or obtaining) (e.g., determining; e.g., and providing; e.g., dynamically (e.g., by downlink control information, DCI), semi-statically (e.g., by radio resource control, RRC) or by Medium Access Control, MAC, e.g., by a MAC Control Element, MAC-CE) a grouping indication indicating a grouping of OFDM symbols (e.g., or (e.g., physical) slots) into virtual slots;
   - providing (e.g., dynamically (e.g., by downlink control information, DCI)) (e.g., and/or obtaining, e.g., determining) a Time Domain Resource Allocation, TDRA, information (e.g., using a TDRA table) for a data (e.g., PDSCH, PUSCH) or control channel transmission;
   - determining (e.g., scheduling) at least one resource allocation (e.g., slots, transport block size, encoding scheme, rate matching) for the data (e.g., PDSCH, PUSCH) or control channel transmission based at least on the TDRA information and the grouping indication;
   - performing and/or receiving the data or control channel transmission (e.g., from or to the first apparatus) using the determined resource allocation.

All features disclosed with respect to the first, second, third, fourth, fifth and/or sixth example aspect are disclosed for the seventh, eighth and/or ninth example aspect and vice versa, where applicable.

### BRIEF DESCRIPTION OF THE FIGURES

- Fig. 1: show schematic diagrams illustrating an example radio environment in which example embodiments of the present disclosure may be performed;
- Fig. 2: shows a signaling diagram in which example aspects of the disclosure are illustrated;
- Fig. 3: illustrates an embodiment according to all aspect of the disclosure;
- Fig. 4: illustrates an embodiment according to all aspect of the disclosure;
- Fig. 5: illustrates an embodiment according to all aspect of the disclosure;
- Fig. 6: illustrates an embodiment according to all aspect of the disclosure;
- Fig. 7: illustrates an embodiment according to all aspect of the disclosure;
- Fig. 8: shows a flow chart illustrating an embodiment according to the first, second and third example aspect of the disclosure;
- Fig. 9: shows a flow chart illustrating an embodiment according to the fourth, fifth and sixth example aspect of the disclosure;
- Fig. 10: shows a block diagram illustrating an embodiment according to the first, second and third example aspect of the disclosure;
- Fig. 11: shows a block diagram illustrating an embodiment according to the fourth, fifth and sixth example aspect of the disclosure;
- Fig. 12: shows a schematic illustration of examples of tangible and non-transitory computer-readable storage media.

### DETAILED DESCRIPTION OF THE FIGURES

The following description serves to deepen the understanding of the present disclosure and shall be understood to complement and be read together with the description of example embodiments of the present disclosure as provided in the above SUMMARY section of this specification.

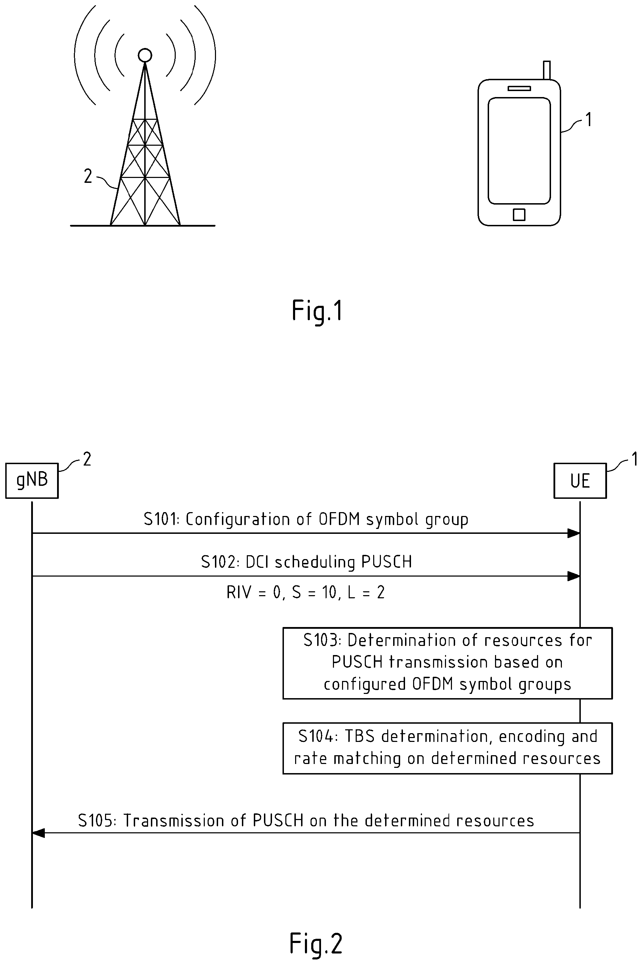

Fig. 1 shows a radio environment comprising a base station 2 (e.g., gNB; e.g., according to the fourth, fifth, and/or sixth example aspect) and a mobile terminal 1 (e.g., UE; e.g., according to the first, second and/or third example aspect) 1. The base station 2 and the mobile terminal 1 may in particular form a system according to the seventh, eighth, and/or ninth example aspect. The mobile terminal 1 may for instance obtain a grouping indication from the base station 2 and/or a TDRA information. The mobile terminal 1 may subsequently determine allocated resources based on the grouping indication and TDRA information and either receive (from the base station 2) and/or perform (e.g., to the base station 2) a channel transmission using the allocated resources. The base station 2 may similarly provide (e.g., and/or obtain) a grouping indication and/or a TDRA information to the mobile terminal 1. The base station 2 may determine allocated resources based on the grouping indication and TDRA indication. The base station may receive (e.g., from the mobile terminal 1) and/or perform (e.g., to the mobile terminal 1) a channel transmission using the allocated resources.

Fig. 2 shows a signaling chart illustrating how a base station 2 (e.g., gNB; e.g., according to the fourth, fifth, and/or sixth example aspect) and a mobile terminal 1 (e.g., UE; e.g., according to the first, second and/or third example aspect) 1. The base station 2 and the mobile terminal 1 may in particular form a system according to the seventh, eighth, and/or ninth example aspect.

The shown example implementation is based on OFDM symbol groups (e.g., determination and/or utilization), without explicitly referring to the concept of a virtual slot.

In a step S101, the gNB 2 configures the UE 1 with a OFDM symbol group operation, e.g., by means of the grouping indication. For instance, a size of the OFDM symbol group may be configured at this stage. Additionally or alternatively, an OFDM symbol group size may be indicated at a later stage. For instance, a size of the OFDM symbol groups is configured in step S101 (e.g. via RRC). The OFDM symbol group may for instance have a size of 4 OFDM symbols in time.

Subsequently, in step S102, the gNB 2 schedules the UE 1 using a TDRA information transmitted to the UE 1. The scheduling may involve an indication of scheduled resources and/or may guide the UE in determining allocated and/or scheduled resources, e.g., allocated resources to be used by the UE 1 to transmit a data and/or control channel, e.g., here, a PUSCH. The TDRA information may comprise at least one or more parameter. In the shown embodiment, such parameter have been termed in accordance with 5G with terminology for simplicity. Different parameters and different parameter names may be used without departing from the scope of the present disclosure.

The example parameters of the TDRA information comprise a starting symbol (S) in the time domain, wherein the starting symbol refers to a symbol within a first slot scheduled for transmission for a first scheduled symbol group. S is set to 10, i.e., the PUSCH is to be transmitted from the 10^{th} symbol of the first slot of the first symbol group onwards. Further, a number of scheduled symbol groups (L) is set to 2. I.e., the length of the allocated resource is defined by the parameter L. Terminology is also here aligned with NR terminology, but that is not necessary for the concept. S and L may be defined based on a basic allocation unit, e.g., an OFDM symbol group as shown here or a virtual slot or a (e.g., physical) slot. The integer values provided by the TDRA information may be applied to the basic allocation unit. Additionally or alternatively, a starting symbol S may be omitted. For instance, instead, a time offset (e.g., using an offset unit) from a PDCCH scheduling the PUSCH might be defined.

Step S103: Shows how the UE 1 determines the allocated resources based on the grouping indication (e.g., based on this, the resource allocation is performed based on OFDM symbol groups and/or, e.g., a OFDM symbol group configuration such as a size of, e.g., 4 symbols per group) and the scheduling parameters (e.g., TDRA information).

In step S104, the UE 1 may, e.g., based on the determined resources, determine the transport block size, TBS, (e.g., based on a TBS determination mode, e.g., indicated by the gNB 2). The UE 1 may further encode data (e.g., the TB; e.g., the data payload) and rate match it to fit the determined allocated resources (e.g., based on the mapping mode, e.g., indicated by the gNB 2).

The UE 1 then transmits the PUSCH on the determined allocated resources in step S105.

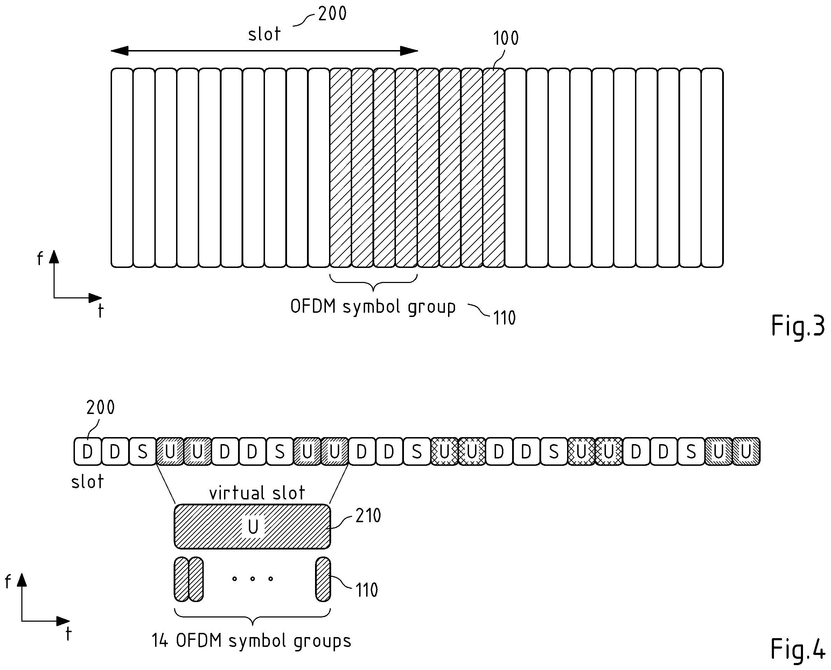

Fig. 3 continues and supplements the embodiment disclosed with respect to Fig. 2. Shown are slots 200 containing OFDM symbols 100. Shaded areas indicate allocated resources which correspond to two 4-symbol OFDM symbol groups 110 based on OFDM group scheduling. Since two consecutive OFDM symbol groups 110 were scheduled, a respective containing 4 OFDM symbols, a total number of resources allocated for transmission of the PUSCH is equal 8 OFDM symbols. It is also to be noted that since S = 10 (see embodiment of Fig. 2, S is the starting value of the transmission within the first slot 200), the OFDM symbol grouping provides an allocation that spans two slots.

Fig. 4 shows an example implementation of virtual slot determination and OFDM symbol group determination for a number of 4 slots. In time, there is a time division duplex, TDD, pattern by which first, two downlink slots are provided, then one special slot and two uplink slots, short DDSUU. When considering a PUSCH data channel, only UL slots may be part of a virtual slot 210. Similarly shaded slots 200 may form part of a same virtual slot 210.

Differently than the example above relating to the flowchart of Fig. 3, here the OFDM symbol groups 110 are not determined based on the indicated starting symbol within the first slot scheduled for transmission (S), but are determined relative to the span of the virtual slot 210, i.e. the first OFDM symbol group 110 starts at the first symbol of the virtual slot 210 and the last OFDM symbol group 110 ends at the last symbol of the virtual slot 210. The other OFDM symbol groups 110 are determined consecutively starting from the first OFDM symbol group 110. In this case the UE and gNB may operate in a same manner as they would when considering physical slots but for virtual slots.

It is vital to note in Fig. 3 that the virtual slot 210 contains 14 OFDM symbol groups 110, just as many as the slot 200 contains OFDM symbols 100. Similarly, the OFDM symbol group 110 will contain 4 OFDM symbols, and therefore as many as the virtual slot 210 contains slots 200.

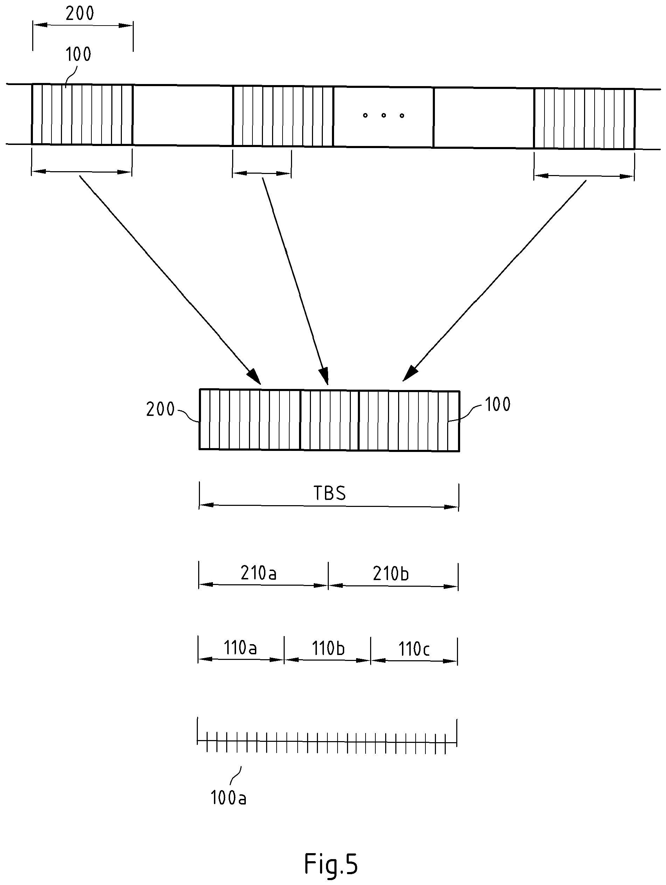

Fig. 5 illustrates one more the flexibility of allocating resources enabled by the present disclosure. From three slots 200, OFDM symbols 100 are taken, e.g., wherein the slots 200 may not be continuous and/or wherein OFDM symbols 100 may be left to other transmissions as can be seen in the central slot 200. Where some OFDM symbols 100 are not used for this allocation. The OFDM symbols 100 are then combined to an abstracted set of OFDM symbols which may be addressed (e.g., used) for scheduling and/or allocation by using for instance either of virtual slots 210a, 210b or OFDM symbol groups 110a, 110b, 110c.

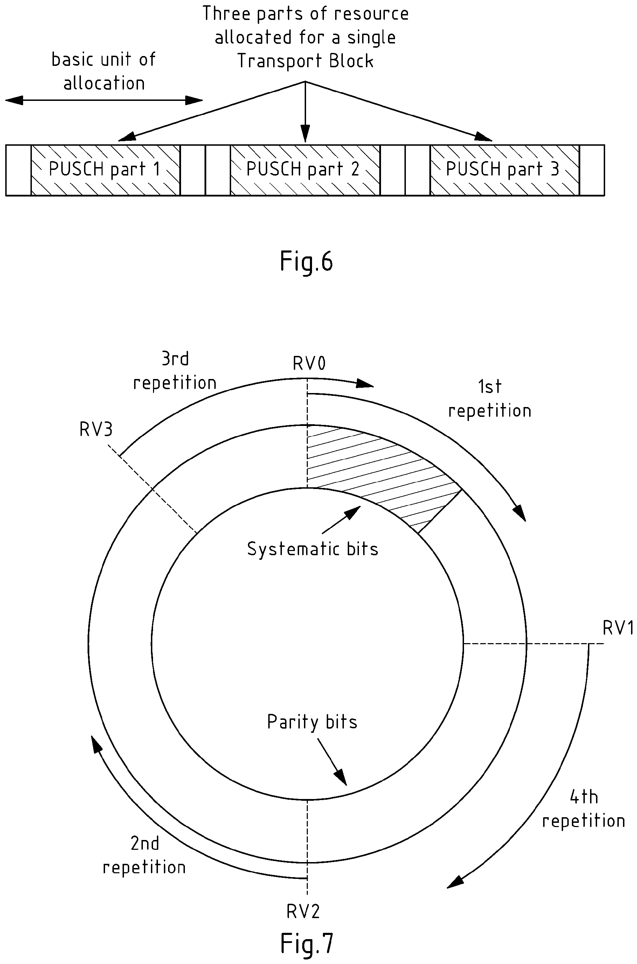

Fig. 6 shows a split of a given channel transmission (e.g., PUSCH) into three parts. The individual parts may for instance correspond to slots, OFDM symbol groups or virtual slots. For instance, behind the seemingly contiguous series of basic allocation units, a more complicated physical reality such as the one shown in Fig. 5 may be hidden.

Instead of three parts of a PUSCH transmission that jointly make up one transmission, at least two of the shown PUSCH transmissions may be repetitions. E.g., if a TBS size determined according to a TBS determination mode, is smaller than what the allocated resources allow (e.g., by a factor of at least two), the PUSCH transmission may be transmitted with a lower coding rate than a target coding rate given by an indicated modulation and coding scheme, MCS. Additionally or alternatively, if a TBS determined according to a TBS determination mode is based on a shorter resource allocation than a total resource allocation of the three parts (e.g. only based on a single part), a PUSCH transmission may be repeated at least once (e.g. two times).

In particular for repeated transmissions, different variants of selecting a redundancy version, RV, of a HARQ process may be chosen. Fig. 7 illustrates a circular nature of a typical HARQ process wherein for any retransmission, one of RV 0 - 3 has to be selected. When assuming that in Fig. 6, the three transmissions comprise a first, initial transmission and two re-transmissions, a mapping mode (e.g., indicated to a UE, by a gNB) may determine whether or not RV is varied for a given re-transmission. Additionally or alternatively, RV may be varied at different granularities, e.g., slots, OFDM symbol groups and/or virtual slots.

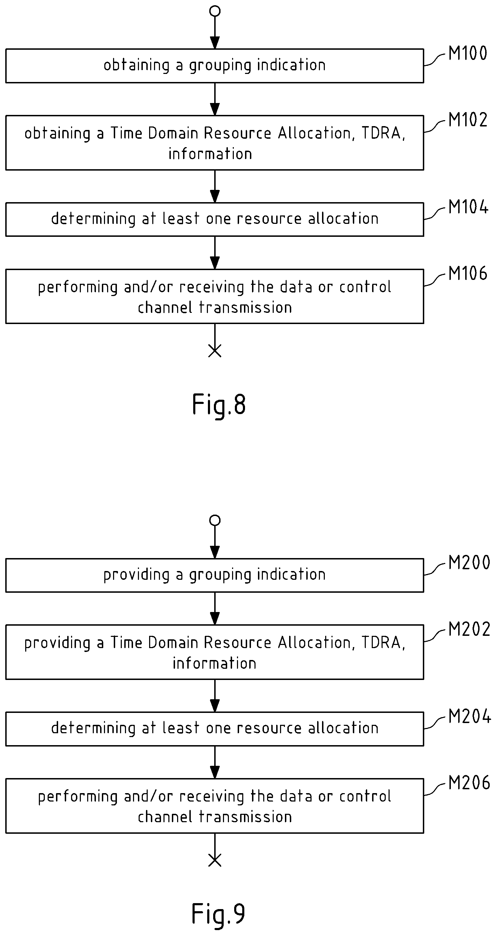

Fig. 8 shows a flowchart of an example embodiment according to the first, second and/or third example aspect, for instance performed by a UE. The method comprises obtaining (e.g., from a network node according to the fourth, fifth and/or sixth example aspect) a grouping indication in step M100. The grouping indication may indicate whether and by what allocation unit (e.g., OFDM symbol group and/or virtual slot; e.g., including their respective size) a scheduling is performed and/or resources are allocated. The UE further obtains (e.g., from a network node according to the fourth, fifth and/or sixth example aspect) a TDRA information in step M102 which may indicate, e.g., for a next data or control channel transmission, allocated resources in time. The UE may subsequently, in step M104, determine at least one resource allocation, e.g., a set of scheduled OFDM symbols, OFDM symbol groups and/or slots. Based on the determined resource allocation, the UE in step M106 either receives and/or performs a transmission of the channel (e.g., from or to a network node according to the fourth, fifth and/or sixth example aspect).

Fig. 9 shows a flowchart of an example embodiment according to the fourth, fifth and/or sixth example aspect, for instance performed by a network node (e.g., gNB). The method comprises providing a grouping indication in step M200 (e.g., to a UE according to the first, second and/or third example aspect). The grouping indication may indicate whether and by what allocation unit (e.g., OFDM symbol group and/or virtual slot; e.g., including their respective size) a scheduling is performed and/or resources are allocated. The network node further provides a TDRA information in step M202 (e.g., to a UE according to the first, second and/or third example aspect) which may indicate, e.g., for a next data or control channel transmission, allocated resources in time. The network node may subsequently, in step M204, determine at least one resource allocation, e.g., a set of scheduled OFDM symbols, OFDM symbol groups and/or slots. Based on the determined resource allocation, the network node in step M206 either receives and/or performs a transmission of the channel (e.g., to or from a UE according to the first, second and/or third example aspect).

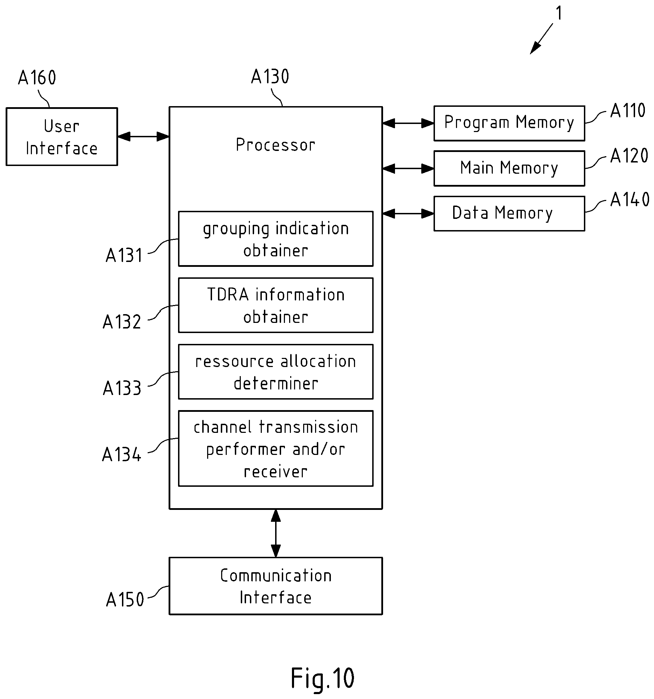

Fig. 10 shows an example block diagram of an apparatus 1, e.g., a UE. The apparatus 1 may perform a method according to the first, second and/or third example aspect. The apparatus comprises a user interface A160, a program memory A110, a main memory A120, and a data memory A140. Further, it comprises a processor A130. The apparatus 1 may further comprise the functional units grouping indication obtainer A131, TDRA information obtainer A132, resource allocation determiner A133, channel transmission performer and/or receiver A134 which respectively correspond to the action as shown in the flowchart of figure 8. A functional unit may for instance correspond to a code block within a memory A110, A120, A140. The grouping indication obtainer A131, TDRA information obtainer A132 and/or channel transmission performer and/or receiver A134 may for instance be connected to and/or control the communication interface A150.

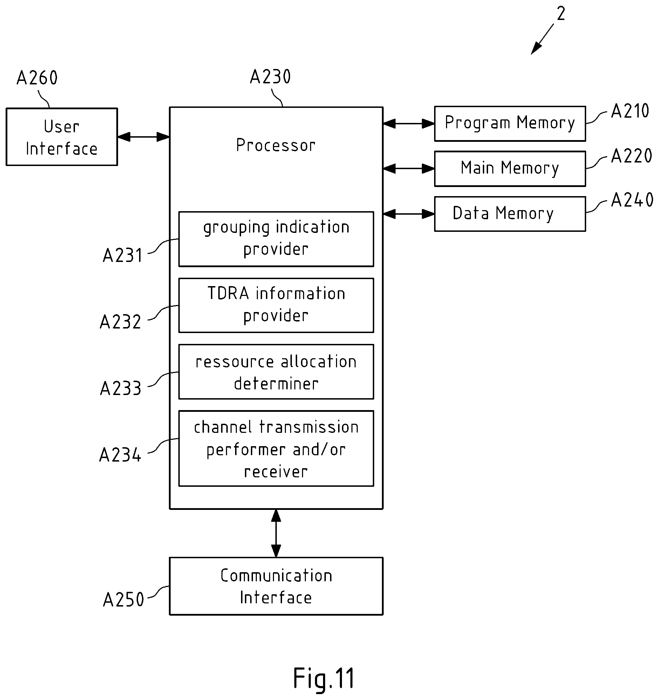

Fig. 11 shows an example block diagram of an apparatus 2, e.g., a network node. The apparatus 2 may perform a method according to the fourth, fifth and/or sixth example aspect. The apparatus 2 comprises a user interface A260, a program memory A210, a main memory A220, and a data memory A240. Further, it comprises a processor A230. The apparatus 2 may further comprise the functional units grouping indication provider A231, TDRA information obtainer A232, resource allocation determiner A233, channel transmission performer and/or receiver A234 which respectively correspond to the action as shown in the flowchart of figure 8. A functional unit may for instance correspond to a code block within a memory A210, A220, A140. The grouping indication obtainer A231, TDRA information obtainer A232 and/or channel transmission performer and/or receiver A234 may for instance be connected to and/or control the communication interface A250.

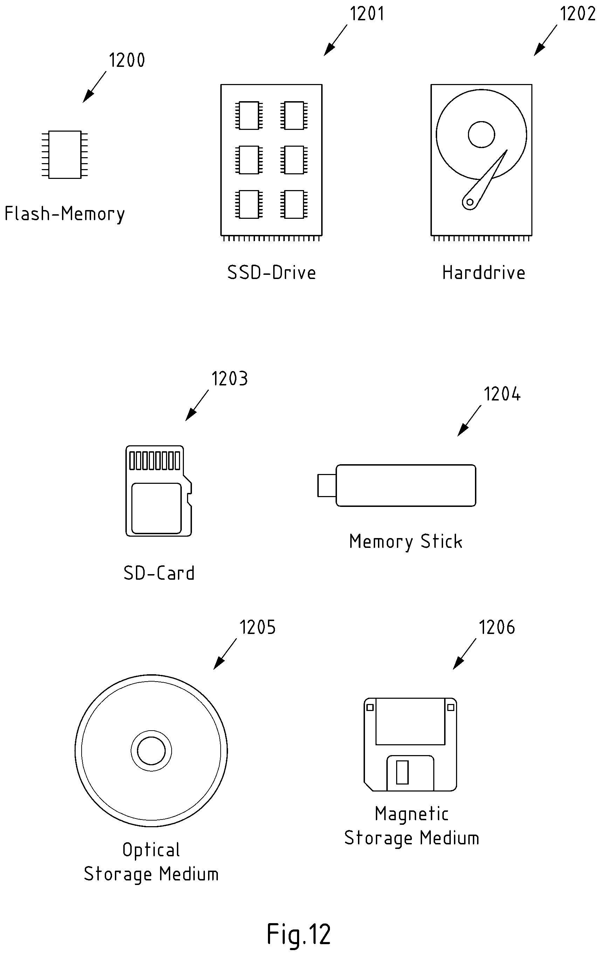

Fig. 12 is a schematic illustration of examples of tangible and non-transitory computer-readable storage media according to the present invention that may for instance be used to implement program and/or main memory A110, A120, A140, A210, A220, A240 of the apparatus 1 and/or 2 of Fig. 10 and 11. Fig. 12 shows a flash memory 1200, which may for instance be soldered or bonded to a printed circuit board, a solid-state drive 1201 comprising a plurality of memory chips (e.g. Flash memory chips), a magnetic hard drive 1202, a Secure Digital (SD) card 1203, a Universal Serial Bus (USB) memory stick 1204, an optical storage medium 1205 (such as for instance a CD-ROM or DVD) and a magnetic storage medium 1206.

Some embodiments comprise:
In the following a UE may refer to an apparatus performing and/or controlling the method according to the first, second and/or third example aspect and a gNB may refer to an apparatus performing and/or controlling the method according to the fourth, fifth and/or sixth example aspect.

In one embodiment, the OFDM symbol group may be a reference quantity for resource allocation for PUSCH transmission. This may mean that the scheduling of time domain resources is based on the OFDM symbol group. In one embodiment, the OFDM symbol group may contain a number of OFDM symbols and a number of resource elements, REs, and/or physical resource blocks, PRBs, in frequency. In one embodiment, a frequency domain resource allocation, FDRA, and/or time domain resource allocation, TDRA, fields in a scheduling DCI may be configured so that at least one of them indicates a number of scheduled OFDM symbol groups, e.g., in frequency and/or in time domain, respectively. Multiple OFDM symbol groups may then be scheduled and/or allocated and a UE may transmit and/or a gNB may receive a respective channel in aggregated resources according to the channel.

In another embodiment, UE may determine a size of an OFDM symbol group based on a gNB indication. The gNB indication may be based on at least one (e.g., specific) parameter, e.g. based on a coverage or path loss conditions of the UE, e.g. reported by UE to gNB with power headroom report (PHR). The gNB indication may be provided either semi-statically (RRC), via MAC-CE or dynamically via DCI. In one embodiment, OFDM symbol grouping may be a resource allocation type and when active, a part of the bits of an FDRA field may be used for indication of, e.g., a size of the OFDM symbol group. For example, the FDRA may be limited to at most a few RBs, e.g. up to 4 RBs. At least one or more excess bits of the FDRA field may be used for the symbol group size indication. Additionally or alternatively, if excess FDRA bits remain, at least one or more excess bit(s) may be appended to the TDRA field, facilitating use of a larger TDRA table.

In another embodiment, a UE may determine a size of the OFDM symbol group based on autonomous determination based on specific parameters (e.g. latest power headroom report, PHR). For instance, a mapping table between PHR values and size of the OFDM symbol group is either predetermined at the UE (e.g., via standard specification) and/or indicated/configured by the gNB at the UE. In one implementation, the considered PHR values are either reported for a narrow FDRA (of only few RBs) or the reported PHR value, corresponding to a wider FDRA, is scaled to correspond to a narrow FDRA. This way small PHR reported for wide RB allocation does not trigger the OFDM symbol group extension.

In one embodiment, the size of the OFDM symbol group in time may be defined in a number of OFDM symbols, and/or in a multiple or fractions of slots, and/or in a multiple or fractions of subframes, and/or in multiple or fractions of frames. In one embodiment, a transport block size, TBS, determination is based on a number of scheduled OFDM symbols groups in time and frequency domain. In another embodiment, TBS determination is based on a number of scheduled OFDM symbol groups, but a smallest OFDM symbol group size (among all possible configurable/configured values of OFDM symbol group size) is used in the TBS determination, instead of a current/indicated OFDM symbol group size. This may effectively introduce lower code rates. In one embodiment, a TBS determination may be based on a total number of resources within the scheduled OFDM symbols groups. In one embodiment, UE may be indicated which approach to use for determination of a TBS starting from the symbol groups.

In one embodiment, a UE may determine a size of a virtual slot based on a gNB indication. In another embodiment, a UE may determine a size of a virtual slot based on at least one or more specific parameters (e.g. latest PHR). In one embodiment, a UE may determine a OFDM symbol group size based on a determined virtual slot size, e.g., so that 14 OFDM symbol groups can be found in the virtual slot. In one embodiment, virtual slots are determined consecutively starting from slot 0 of frame 0. This may mean that for example for example in FDD, a virtual slot 0 includes physical slots 0 and 1, virtual slot 1 includes physical slots 2 and 3, and so on. In another embodiment, in a TDD system, virtual slots are determined so that they contain only UL slots of the TDD pattern starting from slot 0 of frame 0.

Some further embodiments comprise:
Embodiment 1: A first method (e.g., performed and/or controlled by a first apparatus, e.g. UE) comprising:
   - means for obtaining a grouping indication indicating of a grouping of OFDM symbols into OFDM symbol groups and a grouping of the OFDM symbol groups into virtual slots;
   - means for obtaining a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 2: A second method (e.g., performed and/or controlled by a first apparatus, e.g. UE) comprising:
   - means for obtaining a grouping indication indicating of a grouping of OFDM symbols into OFDM symbol groups;
   - means for obtaining a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 3: A third method (e.g., performed and/or controlled by a first apparatus, e.g. UE) comprising:
   - means for obtaining a grouping of OFDM symbols into virtual slots;
   - means for obtaining a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 4: The first, second or third method of any of embodiments 1 to 3, wherein:
   - the OFDM symbols are grouped into slots and the virtual slots comprises a number of OFDM symbol groups, wherein the number of OFDM symbol groups is equal to a number of OFDM symbols in a slot, or
   - the virtual slots comprises a number of slots, wherein the number of slots is equal to a number of OFDM symbols in an OFDM symbol group.
Embodiment 5: The first, second or third method of any of embodiments 1 to 4, wherein at least one of:
   - the TDRA information is based on a basic unit of allocation in the time domain, and wherein the basic unit of allocation corresponds to:
      - an OFDM symbol, or
      - an OFDM symbol group, or
   - the TDRA information is based on a basic offset unit in the time domain, and wherein the basic offset unit correspond to
      - a slot, or
      - a virtual slot.
Embodiment 6: The first, second or third method of embodiment 5, wherein the TDRA information provides at least one of
   - an integer multiple of the basic unit of allocation for the data or control channel transmission or
   - an integer multiple of the basic offset unit for the data or control channel transmission.
Embodiment 7: The first, second or third method of embodiment 5 or 6, wherein determining the at least one resource allocation comprises at least one of
   - selecting the OFDM symbol or the OFDM symbol group as the basic unit of allocation based on the grouping indication, or
   - selecting a slot or a virtual slot as the basic offset unit based on the grouping indication.
Embodiment8: The first, second or third method of any of embodiments 1 to 7, further comprising means for obtaining an indication indicating a Transport Block Size, TBS, determination mode, wherein the TBS determination mode indicates whether a transport block size is calculated based on a number of OFDM symbols, or on a number of OFDM symbol groups, or on a number of virtual slots.
Embodiment 9: The first, second or third method of embodiment 8, wherein determining at least one resource allocation comprises determining at least one TBS based on the grouping indication and the TBS determination mode.
Embodiment 10: The first, second or third method of any of embodiments 1 to 9, further comprising means for obtaining an indication indicating a mapping mode, wherein the mapping mode determines a mapping of a transport block onto the at least one determined resource allocation.
Embodiment 11: The first, second or third method of embodiment 10, wherein the mapping mode determines at least one of:
   - whether a redundancy version, RV, is kept constant across a number of OFDM symbols, or across a number of OFDM symbol groups, or across a number of virtual slots;
   - whether a redundancy version, RV, is kept constant within one or more OFDM symbol groups or within one or more virtual slots;
   - whether an RV is varied across a number of OFDM symbols, or across a number of OFDM symbol groups, or across a number of virtual slots; or
   - whether an RV is varied within one or more OFDM symbol groups or within one or more virtual slots.
Embodiment 12: The first, second or third method of embodiment 10 or 11, wherein the mapping mode determines that a redundancy version, RV, is cycled according to at least one of:
   - RV cycling per OFDM symbol groups,
   - RV cycling per slot,
   - RV cycling per group of slots,
   - RV cycling per virtual slot, or
   - RV cycling per group of virtual slots.
Embodiment 13: The first, second or third method of any of embodiments 1 to 12, wherein the grouping indication comprises at least one of
   - an indication whether determining at least one resource allocation is based on OFDM symbol groups and/or virtual slots, or
   - an indication of grouping characteristics of the OFDM symbol groups or the virtual slots.
Embodiment 14: The first, second or third method of any of embodiments 1 to 13, wherein obtaining the grouping indication comprises receiving the grouping indication from a network node, and in response to receiving the grouping indication, determining grouping characteristics based on the grouping indication.
Embodiment 15: The first, second or third method of embodiment 14, wherein:
   - the grouping of OFDM symbols into OFDM symbol groups is determined based on the grouping of the OFDM symbol groups into virtual slots, or
   - the grouping of the OFDM symbol groups into virtual slots is determined based on the grouping of OFDM symbols into OFDM symbol groups.
Embodiment 16: The first, second or third method of any of embodiments 1 to 15, wherein the grouping of OFDM symbols into OFDM symbol groups is indicated as at least one of:
   - a number of OFDM symbols,
   - a multiple of a slot or of a fraction of a slot,
   - a multiple of a subframe or of a fraction of a subframe, or
   - a multiple of a frame or of a fraction of a frame.
Embodiment 17: The first, second or third method of any of embodiments 1 to 16, wherein the grouping of the OFDM symbol groups into virtual slots is indicated as at least one of
   - a number of OFDM symbol groups,
   - a number of slots,
   - a multiple of a slot or of a fraction of a slot,
   - a multiple of a subframe or of a fraction of a subframe, or
   - a multiple of a frame or of a fraction of a frame.
Embodiment 18: The first, second or third method of any of embodiments 1 to 17, wherein determining at least one resource allocation comprises determining a set of scheduled OFDM symbol groups within at least one virtual slot.
Embodiment 19: The first, second or third method of any of embodiments 1 to 18, wherein the virtual slot comprises at least one of:
   - at least two or more consecutive slots or fractions of a slot,
   - at least two or more separated slots or fractions of a slot.
Embodiment 20: The first, second or third method of any of embodiments 18 to 19, wherein the set of scheduled OFDM symbol groups comprises at least one of:
   - an OFDM symbol group located entirely inside a single slot of the virtual slot,
   - an OFDM symbol group spanning across at least two slots, or
   - an OFDM symbol group spanning across at least two slots, wherein the at least two slots are
      - consecutive, or
      - separated from one another.
Embodiment 21: A fourth method (e.g., performed and/or controlled by a second apparatus, e.g. a network node, e.g., a gNB) comprising:
   - means for providing a grouping indication indicating of a grouping of OFDM symbols into OFDM symbol groups and a grouping of the OFDM symbol groups into virtual slots;
   - means for providing a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 22: A fifth method (e.g., performed and/or controlled by a second apparatus, e.g. a network node, e.g., a gNB) comprising:
   - means for providing a grouping indication indicating of a grouping of OFDM symbols into OFDM symbol groups;
   - means for providing a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 23: A sixth method (e.g., performed and/or controlled by a second apparatus, e.g. a network node, e.g., a gNB) comprising:
   - means for providing a grouping indication indicating of a grouping of OFDM symbols into virtual slots;
   - means for providing a Time Domain Resource Allocation, TDRA, information for a data or control channel transmission;
   - means for determining at least one resource allocation for the data or control channel transmission based at least on the TDRA information and the grouping indication;
   - means for performing and/or receiving the data or control channel transmission using the determined resource allocation.
Embodiment 24: The fourth, fifth or sixth method of any of embodiments 21 to 23, wherein:
   - the OFDM symbols are grouped into slots and the virtual slots comprises a number of OFDM symbol groups, wherein the number of OFDM symbol groups is equal to a number of OFDM symbols in a slot, or
   - the virtual slots comprises a number of slots, wherein the number of slots is equal to a number of OFDM symbols in an OFDM symbol group.
Embodiment 25: The fourth, fifth or sixth method of any of embodiments 21 to 24, wherein at least one of:
   - the TDRA information is based on a basic unit of allocation in the time domain, and wherein the basic unit of allocation corresponds to:
      - an OFDM symbol, or
      - an OFDM symbol group, or
   - the TDRA information is based on a basic offset unit in the time domain, and wherein the basic offset unit correspond to
      - a slot, or
      - a virtual slot.
Embodiment 26: The fourth, fifth or sixth method of embodiment 25, wherein the TDRA information provides at least one of
   - an integer multiple of the basic unit of allocation for the data or control channel transmission or
   - an integer multiple of the basic offset unit for the data or control channel transmission.
Embodiment 27: The fourth, fifth or sixth method of embodiment 25 or 26, wherein determining the at least one resource allocation comprises at least one of
   - selecting the OFDM symbol or the OFDM symbol group as the basic unit of allocation based on the grouping indication, or
   - selecting a slot or a virtual slot as the basic offset unit based on the grouping indication.
Embodiment 28: The fourth, fifth or sixth method of any of embodiments 21 to 27, further comprising means for obtaining an indication indicating a Transport Block Size, TBS, determination mode, wherein the TBS determination mode indicates whether a transport block size is calculated based on a number of OFDM symbols, or on a number of OFDM symbol groups, or on a number of virtual slots.
Embodiment 29: The fourth, fifth or sixth method of embodiment 28, wherein determining at least one resource allocation comprises determining at least one TBS based on the grouping indication and the TBS determination mode.
Embodiment 30: The fourth, fifth or sixth method of any of embodiments 21 to 29, further comprising means for obtaining an indication indicating a mapping mode, wherein the mapping mode determines a mapping of a transport block onto the at least one determined resource allocation.
Embodiment 31: The fourth, fifth or sixth method of embodiment 30, wherein the mapping mode determines at least one of:
   - whether a redundancy version, RV, is kept constant across a number of OFDM symbols, or across a number of OFDM symbol groups, or across a number of virtual slots;
   - whether a redundancy version, RV, is kept constant within one or more OFDM symbol groups or within one or more virtual slots;
   - whether an RV is varied across a number of OFDM symbols, or across a number of OFDM symbol groups, or across a number of virtual slots; or
   - whether an RV is varied within one or more OFDM symbol groups or within one or more virtual slots.
Embodiment 32: The fourth, fifth or sixth method of embodiment 30 or 31, wherein the mapping mode determines that a redundancy version, RV, is cycled according to at least one of:
   - RV cycling per OFDM symbol groups,
   - RV cycling per slot,
   - RV cycling per group of slots,
   - RV cycling per virtual slot, or
   - RV cycling per group of virtual slots.
Embodiment 33: The fourth, fifth or sixth method of any of embodiments 21 to 32, wherein the grouping indication comprises at least one of
   - an indication whether determining at least one resource allocation is based on OFDM symbol groups and/or virtual slots, or
   - an indication of grouping characteristics of the OFDM symbol groups or the virtual slots.
Embodiment 34: The fourth, fifth or sixth method of any of embodiments 21 to 33, wherein obtaining the grouping indication comprises receiving the grouping indication from a mobile terminal.
Embodiment 35: The fourth, fifth or sixth method of embodiment 34, wherein:
   - the grouping of OFDM symbols into OFDM symbol groups is determined based on the grouping of the OFDM symbol groups into virtual slots, or
   - the grouping of the OFDM symbol groups into virtual slots is determined based on the grouping of OFDM symbols into OFDM symbol groups.
Embodiment 36: The fourth, fifth or sixth method of any of embodiments 21 to 35, wherein the grouping of OFDM symbols into OFDM symbol groups is indicated as at least one of:
   - a number of OFDM symbols,
   - a multiple of a slot or of a fraction of a slot,
   - a multiple of a subframe or of a fraction of a subframe, or
   - a multiple of a frame or of a fraction of a frame.
Embodiment 37: The fourth, fifth or sixth method of any of embodiments 21 to 36, wherein the grouping of the OFDM symbol groups into virtual slots is indicated as at least one of
   - a number of OFDM symbol groups,
   - a number of slots,
   - a multiple of a slot or of a fraction of a slot,
   - a multiple of a subframe or of a fraction of a subframe, or
   - a multiple of a frame or of a fraction of a frame.
Embodiment 38: The fourth, fifth or sixth method of any of embodiments 21 to 37, wherein determining at least one resource allocation comprises determining a set of scheduled OFDM symbol groups within at least one virtual slot.
Embodiment 39: The fourth, fifth or sixth method of any of embodiments 21 to 38, wherein the virtual slot comprises at least one of:
   - at least two or more consecutive slots or fractions of a slot,
   - at least two or more separated slots or fractions of a slot.
Embodiment 40: The fourth, fifth or sixth method of any of embodiments 21 to 39, wherein the set of scheduled OFDM symbol groups comprises at least one of:
   - an OFDM symbol group located entirely inside a single slot of the virtual slot,
   - an OFDM symbol group spanning across at least two slots, or
   - an OFDM symbol group spanning across at least two slots, wherein the at least two slots are
      - consecutive, or
      - separated from one another.
Embodiment 41: A first apparatus, e.g., a mobile terminal, e.g., a UE, comprising respective means for performing the method of any of embodiments 1 to 20.
Embodiment 42: A first apparatus, e.g., a mobile terminal, e.g., a UE, comprising at least one processor; and at least one memory storing instructions that, when executed by the at least one processor, cause the apparatus at least to perform and/or control the method according any of embodiments 1 to 20.
Embodiment 43: A second apparatus, e.g., a network node, e.g., a gNB, comprising respective means for performing the method of any of embodiments 21 to 40.
Embodiment 44: A second apparatus, e.g., a network node, e.g., a gNB, comprising at least one processor; and at least one memory storing instructions that, when executed by the at least one processor, cause the apparatus at least to perform and/or control the method according any of embodiments 21 to 40.
Embodiment 45: A computer program, the computer program when executed by a processor causing an apparatus, e.g. the apparatus according to embodiment 41 or 42, to perform and/or control the actions and/or steps of the method of any of embodiments 1 to 20.
Embodiment 46: A computer program product comprising a computer program according to embodiment 45.
Embodiment 47: A computer program, the computer program when executed by a processor causing an apparatus, e.g. the apparatus according to embodiment 43 or 44, to perform and/or control the actions and/or steps of the method of any of embodiments 21 to 40.
Embodiment 48: A computer program product comprising a computer program according to embodiment 47.
Embodiment 49: A system comprising:
   at least one first apparatus according to any of the embodiments 41 or 42;
   at least one second apparatus according to any of the embodiments 43 or 44.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (i) to a combination of processor(s) or (ii) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processors 130, 230, 330 of Figs. 9 to 15, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

Moreover, any of the actions described or illustrated herein may be implemented using executable instructions in a general-purpose or special-purpose processor and stored on a computer-readable storage medium (e.g., disk, memory, or the like) to be executed by such a processor. References to `computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

### LIST OF ABBREVIATIONS

- PDCCH: Physical Downlink control channel
- PDSCH: Physical Downlink shared channel
- PUCCH: Physical Uplink control channel
- PUSCH: Physical uplink shared channel
- DCI: Downlink control information
- UL: Uplink
- DL: Downlink
- UE: User Equipment
- NR: New Radio (5G Radio -5th generation radio)
- TDRA: Time Domain Resource Allocation
- OFDM: Orthogonal Frequency Division Multiplexing
- UE: User Equipment
- TBoMS: Transport Block over Multiple Slots
- gNB: Next generation Node B
- RV: Redundancy Version
- TBS: Transport Block Size
- TDD: Time Division Duplex
- FDD: Frequency Division Duplex
- PHR: Power Headroom Report
- FDRA: Frequency Domain Resource Allocation
- RB: Resource Block
- PRB: Physical Resource Block
- HARQ: Hybrid automatic repeat request
- RRC: Radio Resource Control
- MAC: Medium Access Control
- MAC-CE: MAC Control Element

## Claims

1. An apparatus comprising:
- means for obtaining a grouping indication indicating a grouping of OFDM symbols into virtual slots;
- means for obtaining a Time Domain Resource Allocation, TDRA, information for a data or control channel transmission;
- means for determining at least one resource allocation for the data or control channel transmission based at least on the TDRA information and the grouping indication;
- means for performing and/or receiving the data or control channel transmission using the determined resource allocation.

2. The apparatus according to claim 1, wherein the TDRA information is based on a basic offset unit in the time domain, and wherein the basic offset unit correspond to
- a slot, or
- a virtual slot.

3. The apparatus according to claim 2, wherein the TDRA information provides an integer multiple of the basic offset unit as a for the data or control channel transmission.

4. The apparatus according to claim 2 or 3, wherein determining the at least one resource allocation comprises selecting a slot or a virtual slot as the basic offset unit based on the grouping indication.

5. The apparatus according to any of claims 1 to 4, further comprising means for obtaining an indication indicating a Transport Block Size, TBS, determination mode, wherein the TBS determination mode indicates whether a TBS is calculated based on a number of OFDM symbols, or on at least one virtual slot.

6. The apparatus according to claim 5, wherein determining at least one resource allocation comprises determining at least one TBS based on the grouping indication and the TBS determination mode.

7. The apparatus according to any of claims 1 to 6, further comprising means for obtaining an indication indicating a mapping mode, wherein the mapping mode determines a mapping of a transport block onto the at least one determined resource allocation.

8. The apparatus according to claim 7, wherein the mapping mode determines at least one of:
- whether a redundancy version, RV, is kept constant across a number of OFDM symbols, or across a number of virtual slots;
- whether a redundancy version, RV, is kept constant within one or within one or more virtual slots;
- whether an RV is varied across a number of OFDM symbols, or across a number of virtual slots; or
- whether an RV is varied within one or more virtual slots.

9. The apparatus according to claim 7 or 8, wherein the mapping mode determines that a redundancy version, RV, is cycled according to at least one of:
- RV cycling per slot,
- RV cycling per group of slots,
- RV cycling per virtual slot, or
- RV cycling per group of virtual slots.

10. The apparatus according to any of claims 1 to 9, wherein the grouping information comprises at least one of
- an indication whether determining at least one resource allocation is based on virtual slots and/or
- an indication of grouping characteristics of the virtual slots.

11. The apparatus according to any of claims 1 to 10, wherein obtaining the grouping indication comprises receiving the grouping indication from a network node, and in response to receiving the grouping indication, determining grouping characteristics based on the grouping indication.

12. The apparatus according to any of claims 1 to 11, wherein the grouping of the OFDM symbols into virtual slots is indicated as at least one of
- a number of OFDM symbols,
- a number of slots,
- a multiple of a slot or of a fraction of a slot,
- a multiple of a subframe or of a fraction of a subframe, or
- a multiple of a frame or of a fraction of a frame.

13. The apparatus according to any of claims 1 to 12, wherein the virtual slot comprises at least one of:
- at least two or more consecutive slots or fractions of a slot,
- at least two or more separated slots or fractions of a slot.

14. An apparatus comprising:
- means for providing a grouping indication indicating a grouping of OFDM symbols into virtual slots;
- means for providing a Time Domain Resource Allocation, TDRA, information for a data or control channel transmission;
- means for determining at least one resource allocation for the data or control channel transmission based at least on the TDRA information and the grouping indication;
- means for performing and/or receiving the data or control channel transmission using the determined resource allocation.

15. The apparatus according to claim 14, wherein the TDRA information is based on a basic offset unit in the time domain, and wherein the basic offset unit correspond to
- a slot, or
- a virtual slot.

16. The apparatus according to claim 15, wherein the TDRA information provides an integer multiple of the basic offset unit as a for the data or control channel transmission.

17. The apparatus according to claim 15 or 16, wherein determining the at least one resource allocation comprises selecting a slot or a virtual slot as the basic offset unit based on the grouping indication.

18. The apparatus according to any of claims 14 to 17, further comprising means for providing an indication indicating a Transport Block Size, TBS, determination mode, wherein the TBS determination mode indicates whether a TBS is calculated based on a number of OFDM symbols, or on at least one virtual slot.

19. The apparatus according to claim 18, wherein determining at least one resource allocation comprises determining at least one TBS based on the grouping indication and the TBS determination mode.

20. The apparatus according to any of claims 14 to 19, further comprising means for providing an indication indicating a mapping mode, wherein the mapping mode determines a mapping of a transport block onto the at least one determined resource allocation.

21. The apparatus according to claim 20, wherein the mapping mode determines at least one of:
- whether a redundancy version, RV, is kept constant across a number of OFDM symbols, or across a number of virtual slots;
- whether a redundancy version, RV, is kept constant within one or within one or more virtual slots;
- whether an RV is varied across a number of OFDM symbols, or across a number of virtual slots; or
- whether an RV is varied within one or more virtual slots.

22. The apparatus according to claim 20 or 21, wherein the mapping mode determines that a redundancy version, RV, is cycled according to at least one of:
- RV cycling per slot,
- RV cycling per group of slots,
- RV cycling per virtual slot, or
- RV cycling per group of virtual slots.

23. The apparatus according to any of claims 14 to 22, wherein the grouping information comprises at least one of
- an indication whether determining at least one resource allocation is based on virtual slots and/or
- an indication of grouping characteristics of the virtual slots.

24. The apparatus according to any of claims 14 to 23, wherein providing the grouping indication comprises transmitting the grouping indication to a mobile terminal.

25. The apparatus according to any of claims 14 to 24, wherein the grouping of the OFDM symbols into virtual slots is indicated as at least one of
- a number of OFDM symbols,
- a number of slots,
- a multiple of a slot or of a fraction of a slot,
- a multiple of a subframe or of a fraction of a subframe, or
- a multiple of a frame or of a fraction of a frame.

26. The apparatus according to any of claims 14 to 25, wherein the virtual slot comprises at least one of:
- at least two or more consecutive slots or fractions of a slot,
- at least two or more separated slots or fractions of a slot.

27. A system comprising
- a first apparatus comprising:
- means for obtaining a grouping indication indicating a grouping of OFDM symbols into virtual slots;
- means for obtaining a Time Domain Resource Allocation, TDRA, information for a data or control channel transmission;
- means for determining at least one resource allocation for the data or control channel transmission based at least on the TDRA information and the grouping indication;
- means for performing and/or receiving the data or control channel transmission using the determined resource allocation; and
- a second apparatus comprising:
- means for providing a grouping indication indicating of a grouping of OFDM symbols into virtual slots;
- means for providing a Time Domain Resource Allocation, TDRA, information for a data or control channel transmission;
- means for determining at least one resource allocation for the data or control channel transmission based at least on the TDRA information and the grouping indication;
- means for performing and/or receiving the data or control channel transmission using the determined resource allocation.
